(19)

Europäisches
Patentamt
European
Patent Office
Office européen
des brevets

(11) **EP 4 276 082 A1**

(12) **EUROPEAN PATENT APPLICATION**
published in accordance with Art. 153(4) EPC

(43) Date of publication:
**15.11.2023 Bulletin 2023/46**

(21) Application number: **21917732.6**

(22) Date of filing: **24.12.2021**

(51) International Patent Classification (IPC):
*C03C 21/00* (2006.01)    *C03C 3/083* (2006.01)
*G09F 9/00* (2006.01)

(52) Cooperative Patent Classification (CPC):
**C03C 3/083; C03C 21/00; G09F 9/00**

(86) International application number:
**PCT/JP2021/048430**

(87) International publication number:
**WO 2022/149512 (14.07.2022 Gazette 2022/28)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.01.2021  JP 2021001081**

(71) Applicant: **AGC INC.**
**Chiyoda-ku,**
**Tokyo 1008405 (JP)**

(72) Inventors:
• **MASUDA, Yuichi**
  **Tokyo 100-8405 (JP)**
• **ITO, Masabumi**
  **Tokyo 100-8405 (JP)**
• **EZURA, Hiroyuki**
  **Tokyo 100-8405 (JP)**

(74) Representative: **Müller-Boré & Partner**
**Patentanwälte PartG mbB**
**Friedenheimer Brücke 21**
**80639 München (DE)**

(54) **GLASS SHEET, DISPLAY DEVICE, AND GLASS SHEET MANUFACTURING METHOD**

(57)    The present invention pertains to a glass sheet that comprises a first principal surface, a second principal surface, and an end surface connecting the first principal surface and the second principal surface and that has a compressive stress layer. In the glass sheet, the longest crack length in a region, which ranges from a portion located apart from an edge of the end surface at the first principal surface side by a length equal to 9% of the thickness toward the second principal surface side to a portion located apart from the edge of the end surface at the first principal surface by a length equal to 91% of the thickness toward the second principal surface side, is 5-20 $\mu$m, and the longest crack length in a region, which ranges from an edge of the end surface at the second principal surface side to a portion located apart from the edge of the end surface at the second principal surface side by a length equal to 6% of the thickness toward the first principal surface side, satisfies a specific formula.

[FIG. 8]

**Description**

TECHNICAL FIELD

The present invention relates to a glass sheet, a display device, and a glass sheet manufacturing method.

BACKGROUND ART

A display device mounted on a vehicle may be provided with a glass sheet (cover glass) that covers a display surface. Such a glass sheet may have its end surface (side surface) polished in order to improve impact resistance. Patent Document 1 discloses a cover glass of which a surface roughness Ra of a chamfered portion on a side surface on a front side is more than 100 nm and a surface roughness Ra of a chamfered portion on a side surface on a back side is 100 nm or less.

CITATION LIST

PATENT DOCUMENT

Patent Document 1: WO2017/208995

SUMMARY OF INVENTION

TECHNICAL PROBLEM

However, in the case where a polishing degree of an end surface is large, the impact resistance is improved, but a change in dimension between before polishing and after polishing may become too large or a polishing time may become too long. Accordingly, there is a need for a glass sheet which is not limited to an application as the above-described display device mounted on a vehicle, and can prevent a decrease in the impact resistance while preventing the change in dimension between before polishing and after polishing from becoming too large and the polishing time from becoming too long.

The present invention has been made in view of the above problem, and an object of the present invention is to provide a glass sheet, a display device, and a glass sheet manufacturing method, which prevent a decrease in impact resistance while preventing a change in dimension between before polishing and after polishing from becoming too large and a polishing time from becoming too long.

SOLUTION TO PROBLEM

In order to solve the above-described problem and achieve the object, the glass sheet according to the present disclosure is a glass sheet including a first main surface, a second main surface, and an end surface connecting the first main surface and the second main surface, and having a compressive stress layer. In the glass sheet, within the end surface of at least a partial section of a circumference of the main surfaces of the glass sheet, a length of a longest crack in a direction perpendicular to a surface on which the crack is formed in a region is 5 μm or more and 20 μm or less, the region extending, from a location that is separated by a length of 9% of a thickness of the glass sheet from an end portion on a first main surface side of the end surface toward a second main surface side along a thickness direction of the glass sheet, to a location that is separated by a length of 91% of the thickness of the glass sheet from the end portion on the first main surface side of the end surface toward the second main surface side, and

a length of a longest crack in a direction perpendicular to a surface on which the crack is formed in a region is smaller than a satisfying the following formula (A), the region extending, from an end portion on the second main surface side of the end surface, to a location that is separated by a length of 6% of the thickness of the glass sheet from the end portion on the second main surface side of the end surface toward the first main surface side along the thickness direction of the glass sheet.

[Math. 1]

$$\sigma'_{FS}(a) = \frac{K_{IC}}{\sqrt{\pi a} \cdot F} + \frac{1}{a}\int_0^a f(x)dx = 900 MPa \qquad \cdots (A)$$

Here, a represents a length ($\mu$m) of a crack, $K_{IC}$ represents a fracture toughness value (MPa·m$^{0.5}$), F represents a correction coefficient of a stress intensity factor and is expressed as 1.1215, and f(x) represents a compressive stress (MPa) acting on the glass sheet at a position of a depth x from the second main surface.

In order to solve the above-described problem and achieve the object, the display device according to the present disclosure includes the glass sheet.

In order to solve the above problem and achieve the object, the glass sheet manufacturing method according to the present disclosure is a method for manufacturing a glass sheet including a first main surface, a second main surface, and an end surface connecting the first main surface and the second main surface, and having a compressive stress layer. The glass sheet manufacturing method includes, within the end surface of at least a partial section of a circumference of the main surfaces of the glass sheet: a step of setting a length of a longest crack in a direction perpendicular to a surface on which the crack is formed in a region to 5 $\mu$m or more and 20 $\mu$m or less, the region extending, from a location that is separated by a length of 9% of a thickness of the glass sheet from an end portion on a first main surface side of the end surface toward a second main surface side along a thickness direction of the glass sheet, to a location that is separated by a length of 91% of the thickness of the glass sheet from the end portion on the first main surface side of the end surface toward the second main surface side; and a step of polishing a region such that a length of a longest crack in a direction perpendicular to a surface on which the crack is formed in the region is smaller than a satisfying the following formula (A), the region extending, from an end portion on the second main surface side of the end surface, to a location that is separated by a length of 6% of the thickness of the glass sheet from the end portion on the second main surface side of the end surface toward the first main surface side along the thickness direction of the glass sheet.

[Math. 2]

$$\sigma'_{FS}(a) = \frac{K_{IC}}{\sqrt{\pi a} \cdot F} + \frac{1}{a} \int_0^a f(x)dx = 900 MPa \qquad \cdots (\text{A})$$

ADVANTAGEOUS EFFECTS OF INVENTION

According to the present invention, it is possible to prevent a decrease in impact resistance while preventing a change in dimension between before polishing and after polishing from becoming too large and a polishing time from becoming too long.

BRIEF DESCRIPTION OF DRAWINGS

[FIG. 1] FIG. 1 is a schematic diagram illustrating an on-vehicle display device according to the present embodiment.
[FIG. 2] FIG. 2 is a schematic diagram of a glass sheet according to the present embodiment.
[FIG. 3] FIG. 3 is a graph illustrating an example of stress distribution in a thickness direction of the glass sheet.
[FIG. 4] FIG. 4 is a graph illustrating an example of a relation between a length of a crack and fracture stress.
[FIG. 5] FIG. 5 is a diagram illustrating a shape of a test piece of a DCDC method.
[FIG. 6] FIG. 6 is a schematic diagram of a Ki-V curve.
[FIG. 7] FIG. 7 is a diagram illustrating an example of bending stress acting on the glass sheet and an allowable crack length at a distance from a second main surface.
[FIG. 8] FIG. 8 is a diagram for illustrating a crack length of an end surface of the glass sheet according to the embodiment.
[FIG. 9] FIG. 9 is a diagram for illustrating a crack length of an end surface of a glass sheet according to another example of the present embodiment.
[FIG. 10] FIG. 10 is a diagram for illustrating a crack length of an end surface of a glass sheet according to another example of the present embodiment.
[FIG. 11] FIG. 11 is a schematic cross-sectional view of a glass sheet and a functional film.
[FIG. 12] FIG. 12 is a graph showing evaluation results of strength in each example.

DESCRIPTION OF EMBODIMENTS

Preferred embodiments of the present invention will be described below in detail with reference to the accompanying drawings. The present invention is not limited to these embodiments, and also includes a combination of the embodiments when there are a plurality of embodiments. In addition, rounding ranges are included for numerical values.

(On-vehicle Display Device)

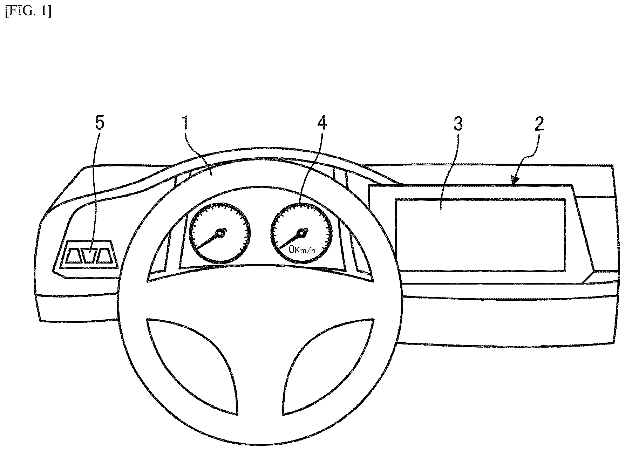

FIG. 1 is a schematic diagram illustrating an on-vehicle display device according to the present embodiment. As illustrated in FIG. 1, a glass sheet 10 according to the present embodiment is provided in an on-vehicle display device 2, and is used as a cover member on a surface of the on-vehicle display device.

The on-vehicle display device 2 is a display device provided in the vehicle, and is provided in front of a steering shaft 1 in the vehicle, for example. The on-vehicle display device 2 displays, for example, a start button 5, various meters such as a car navigation screen 3 and a speedometer 4, and the like. However, the configuration in FIG. 1 is an example, and the on-vehicle display device 2 to which the glass sheet 10 is applied may have any configuration. In addition, the glass sheet 10 is not limited to being used as a cover member for the surface of the on-vehicle display device, and may be used for any application.

(Glass Sheet)

(Shape of Glass Sheet)

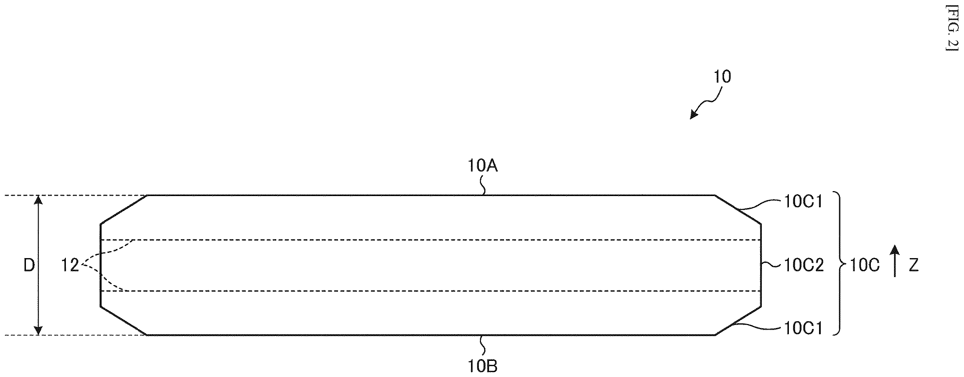

FIG. 2 is a schematic diagram of the glass sheet according to the present embodiment. As illustrated in FIG. 2, the glass sheet 10 according to the present embodiment is a transparent plate-shaped member. The term "transparent" as used herein refers to allowing visible light to be transmitted. Hereinafter, one main surface of the glass sheet 10 is referred to as a main surface 10A, a main surface on the opposite side of the main surface 10A is referred to as a main surface 10B, and a direction from the main surface 10B toward the main surface 10A along a thickness direction of the glass sheet 10 is referred to as a Z direction.

In the example of FIG. 2, the glass sheet 10 has a rectangular flat plate shape when viewed from the Z direction, but the glass sheet 10 may be of any shape. For example, the glass sheet 10 is not limited to the rectangular shape when viewed from the Z direction, and may be of a polygonal shape, a circular shape, an elliptical shape, or the like. In addition, the glass sheet 10 may be of a shape in which a flat plate is curved.

The glass sheet 10 is attached to the on-vehicle display device 2 such that the main surface 10A is on an outer side (a side exposed to the outside) of the on-vehicle display device 2 and the main surface 10B is on an inner side (a side not exposed to the outside) of the on-vehicle display device 2.

Here, a surface connecting the main surface 10A and the main surface 10B of the glass sheet 10 is defined as an end surface 10C. The end surface 10C may be referred to as a side surface of the glass sheet 10, or may be referred to as an outer peripheral surface of the glass sheet 10 when the Z direction is considered as an axial direction. The end surface 10C includes tapered surface portions 10C1 and a side surface 10C2.

The end surface 10C may be a surface formed by a chamfering process or may be a surface formed at the time of cutting. The end surface 10C has a shape including the tapered surface portions 10C1 and the side surface 10C2 over an entire region in a circumferential direction of the glass sheet 10 when viewed from the Z direction.

The side surface 10C2 is a surface including a portion of the end surface 10C that protrudes most outward in a radial direction of the glass sheet 10. The side surface 10C2 is connected to the surfaces of the glass sheet 10 via the tapered surface portions 10C1. That is, in the tapered surface portion 10C1, one end portion in the Z direction is connected to the side surface 10C2, and the other end portion is connected to the surface (main surface) of the glass sheet 10.

More specifically, the tapered surface portions 10C1 are formed on both sides of the side surface 10C2 in the Z direction. That is, the end surface 10C is formed such that one tapered surface portion 10C1, the side surface 10C2, and the other tapered surface portion 10C1 are arranged in this order in the Z direction.

Of the one tapered surface portion 10C1, an end portion on the opposite side to the Z direction is connected to the main surface 10B of the glass sheet 10, and an end portion on the Z direction side is connected to the side surface 10C2. In addition, of the other tapered surface portion 10C1, an end portion on the opposite side to the Z direction is connected to the side surface 10C2, and an end portion on the Z direction side is connected to the main surface 10A of the glass sheet 10.

As illustrated in FIG. 2, the tapered surface portions 10C1 are inclined with respect to the Z direction when viewed from a direction orthogonal to the Z direction. The tapered surface portions 10C1 are inclined inward in the radial direction of the glass sheet 10 from the side surface 10C2 toward a surface side of the glass sheet 10.

In the example of FIG. 2, the tapered surface portions 10C1 are linearly inclined with respect to the Z direction when viewed from the direction orthogonal to the Z direction. That is, the tapered surface portions 10C1 are so-called C-chamfered portions. However, the tapered surface portions 10C1 are not limited to a C chamfer, and may be, for example, a so-called R chamfer that is inclined in a curved shape with respect to the Z direction.

As described above, the end surface 10C has a shape including the tapered surface portion 10C1 on the main surface 10A side, the side surface 10C2, and the tapered surface portion 10C1 on the main surface 10B side, but the shape of the end surface 10C is not limited thereto.

For example, in the end surface 10C, the tapered surface portion 10C1 may not be formed on both the main surface 10A side and the main surface 10B side, and the tapered surface portion 10C1 may be formed on at least one of the main surface 10A side and the main surface 10B side.

In the case where the tapered surface portions 10C1 are formed on both the main surface 10A side and the main surface 10B side, the tapered surface portion 10C1 on the main surface 10A side and the tapered surface portion 10C1 on the main surface 10B side may have the same shape or different shapes.

In addition, for example, the end surface 10C may have a shape not including the tapered surface portion 10C1. In the case where the end surface 10C has the shape not including the tapered surface portion 10C1, the end surface 10C may have a planar shape, or may have an R shape (the entire end surface is an R shape) that is inclined in a curved shape with respect to the Z direction.

A thickness D of the glass sheet 10 is preferably 0.5 mm or more and 3.0 mm or less, more preferably 0.7 mm or more and 2.0 mm or less, still more preferably 1.1 mm or more and 2.0 mm or less, and particularly preferably 1.1 mm or more and 1.3 mm or less. The thickness D of the glass sheet 10 refers to a length from the main surface 10A to the main surface 10B in the Z direction. When the thickness D falls within this range, rigidity can be appropriately improved.

(Material of Glass Sheet)

A material of the glass sheet 10 may be any material, and may be amorphous glass or crystallized glass containing crystals on a surface or inside thereof.

Examples of the glass sheet 10 include alkali-free glass, soda lime glass, soda lime silicate glass, aluminosilicate glass, borosilicate glass, lithium aluminosilicate glass, and borosilicate glass.

The material of the glass sheet 10 is preferably alkali glass in order to appropriately perform chemical strengthening. More specifically, the glass sheet 10 is preferably aluminosilicate glass or lithium aluminosilicate glass to which a large stress is easily introduced by a strengthening treatment even in the case where the thickness is thin and by which a high-strength glass can be obtained even in the case where the thickness is thin. Glass for chemical strengthening, which is based on the aluminosilicate glass, (for example, "Dragontrail (registered trademark)" manufactured by AGC Inc.) is also suitably used. A chemical strengthening treatment is usually performed by immersing glass in a molten salt containing alkali metals.

(Composition of Glass)

The glass sheet 10 may contain, in terms of mol% based on oxides, 50% to 80% of $SiO_2$, 1% to 20% of $Al_2O_3$, and 6% to 20% of $Na_2O$. In addition, the glass sheet 10 may contain, in terms of mol% based on oxides, 50% to 80% of $SiO_2$, 0.1% to 25% of $Al_2O_3$, 3% to 30% of $Li_2O+Na_2O+K_2O$, 0% to 25% of MgO, 0% to 25% of CaO, and 0% to 5% of $ZrO_2$. Further, the glass sheet 10 may contain, in terms of mol% based on oxides, 50% to 80% of $SiO_2$, 1% to 20% of $Al_2O_3$, 6% to 20% of $Na_2O$, 0% to 11% of $K_2O$, 0% to 15% of MgO, 0% to 6% of CaO, and 0% to 5% of $ZrO_2$.

A numerical range represented by using "to" means a range including numerical values described before and after "to" as a lower limit value and an upper limit value. For example, 50% to 80% herein refers to 50% or more and 80% or less when mol% of a total amount of the glass sheet 10 is 100%, and other numerical ranges are the same. In addition, for example, $Li_2O+Na_2O+K_2O$ indicates a total content of $Li_2O$, $Na_2O$, and $K_2O$, and the same applies to other cases where "+" is used.

More specifically, a more preferable composition of the glass sheet 10 includes the following glass compositions. For example, "containing 0% to 25% of MgO" means that MgO is not essential but may be contained up to 25%. Glass of (i) is categorized in the soda lime silicate glass, glass of (ii) and (iii) are categorized in the aluminosilicate glass, and glass of (iv) and (v) are categorized in the lithium aluminosilicate glass.

(i) Glass having a composition containing, in terms of mol% based on oxides, 63% to 73% of $SiO_2$, 0.1% to 5.2% of $Al_2O_3$, 10% to 16% of $Na_2O$, 0% to 1.5% of $K_2O$, 0% to 5% of $Li_2O$, 5% to 13% of MgO, and 4% to 10% of CaO.

(ii) Glass having a composition containing, in terms of mol% based on oxides, 50% to 74% of $SiO_2$, 1% to 10% of $Al_2O_3$, 6% to 14% of $Na_2O$, 3% to 11% of $K_2O$, 0% to 5% of $Li_2O$, 2% to 15% of MgO, 0% to 6% of CaO, and 0% to 5% of $ZrO_2$, in which a total content of $SiO_2$ and $Al_2O_3$ is 75% or less, a total content of $Na_2O$ and $K_2O$ is 12% to 25%, and a total content of MgO and CaO is 7% to 15%.

(iii) Glass having a composition containing, in terms of mol% based on oxides, 68% to 80% of $SiO_2$, 4% to 10% of $Al_2O_3$, 5% to 15% of $Na_2O$, 0% to 1% of $K_2O$, 0% to 5% of $Li_2O$, 4% to 15% of MgO, and 0% to 1% of $ZrO_2$.

(iv) Glass having a composition containing, in terms of mol% based on oxides, 67% to 75% of $SiO_2$, 0% to 4% of

$Al_2O_3$, 7% to 15% of $Na_2O$, 1% to 9% of $K_2O$, 0% to 5% of $Li_2O$, 6% to 14% of $MgO$, and 0% to 1.5% of $ZrO_2$, in which a total content of $SiO_2$ and $Al_2O_3$ is 71% to 75%, a total content of $Na_2O$ and $K_2O$ is 12% to 20%, and a content of CaO is less than 1% when CaO is contained.

(v) Glass having a composition containing, in terms of mol% based on oxides, 56% to 73% of $SiO_2$, 10% to 24% of $Al_2O_3$, 0% to 6% of $B_2O_3$, 0% to 6% of $P_2O_5$, 2% to 7% of $Li_2O$, 3% to 11% of $Na_2O$, 0% to 5% of $K_2O$, 0% to 8% of $MgO$, 0% to 2% of CaO, 0% to 5% of SrO, 0% to 5% of BaO, 0% to 5% of ZnO, 0% to 2% of $TiO_2$, and 0% to 4% of $ZrO_2$.

(Compressive Stress Layer)

The glass sheet 10 has a compressive stress layer 12. The compressive stress layer 12 is formed on an entire surface of the glass sheet 10, that is, on the main surface 10A, the main surface 10B, and the end surface 10C, in this case. The compressive stress layer 12 is formed on the glass sheet 10 by a chemical strengthening treatment.

In the glass sheet 10, the compressive stress layer 12 is not limited to being formed on all of the main surface 10A, the main surface 10B, and the end surface 10C, and the compressive stress layer 12 may be formed on at least one of the main surface 10A, the main surface 10B, and the end surface 10C (preferably, at least the main surface 10B).

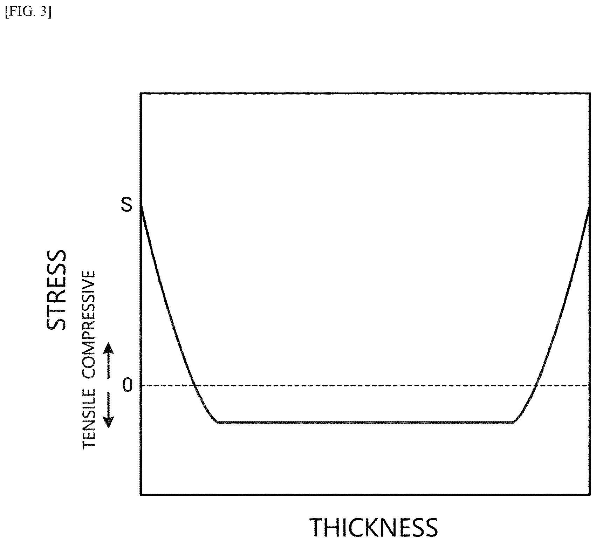

FIG. 3 is a graph illustrating an example of stress distribution in the thickness direction of the glass sheet. The compressive stress layer 12 is a layer on which compressive stress acts in the glass sheet. As illustrated in the example of FIG. 3, compressive stress S acts on the surface of the glass sheet, and the compressive stress decreases toward a center in the thickness direction of the glass sheet.

In the example of FIG. 3, it can be said that the compressive stress layer 12 is a portion of the entire glass sheet at a depth from the surface until the stress becomes zero. In the glass sheet, tensile stress acts on a layer deeper than the depth at which the stress becomes zero. Hereinafter, the compressive stress acting on the surface of the glass sheet 10, that is, a surface of the compressive stress layer 12 is referred to as surface compressive stress CS.

In the glass sheet 10, the surface compressive stress CS is preferably 500 MPa or more and 1,200 MPa or less, more preferably 650 MPa or more, and still more preferably 750 MPa or more. In the case where the surface compressive stress CS falls within this range, a decrease in impact resistance can be appropriately prevented. The surface compressive stress CS may be measured by any method, and may be measured, for example, by measuring a strain in the glass sheet 10 by using a photoelasticity analysis method. In the present embodiment, the surface compressive stress CS may be measured by using, for example, an FSM-6000LE which is a surface stress meter manufactured by Orihara Manufacturing Co., LTD.

In the glass sheet 10, a depth DOL of the compressive stress layer 12 is preferably 10 µm or more and 100 µm or less, more preferably 15 µm or more, still more preferably 25 µm or more, and further preferably 30 µm or more. The depth DOL refers to a thickness of the compressive stress layer 12 in the glass sheet 10. That is, the depth DOL refers to a distance in the thickness direction from the surface of the glass sheet 10 on which the surface compressive stress CS acts to the depth at which a value of the compressive stress becomes 0. In the glass sheet 10, in the case where the depth DOL falls within this range, a decrease in impact resistance can be appropriately prevented.

The depth DOL may be measured by any method, and may be measured, for example, by measuring a strain in the glass sheet 10 by using a photo elasticity analysis method. In the present embodiment, the depth DOL may be measured by using, for example, an FSM-6000LE which is a surface stress meter manufactured by Orihara Manufacturing Co., LTD.

Examples of a method for subjecting the glass to a chemical strengthening treatment to obtain a chemically strengthened glass include, typically, a method for immersing glass in a $KNO_3$ molten salt to conduct an ion exchange treatment, followed by cooling to around room temperature. Treatment conditions such as a temperature of the $KNO_3$ molten salt and an immersion time may be set such that the surface compressive stress and the thickness of the compressive stress layer reach desired values.

The chemical strengthening method is not limited to those using a potassium salt such as the $KNO_3$ molten salt, and may be any method. For example, the chemical strengthening may be performed by using a sodium salt.

(Regarding Impact Resistance)

An end surface of the glass sheet used as a cover member or the like of an on-vehicle display device is polished in order to improve impact resistance. However, in the case where a polishing degree is large such as when polishing an entire region of the end surface, it is possible to remove cracks in the end surface to improve the impact resistance, but a change in dimension between before polishing and after polishing may become too large or a polishing time may become too long.

On the other hand, in the case where the polishing degree is too small, the cracks cannot be appropriately removed, and the impact resistance decreases. In contrast, the present inventors focused on the fact that maximum tensile stress acts on the other main surface 10B when bending stress acts on one main surface 10A of the glass sheet 10. And they found that when a glass sheet is formed such that a crack length in a region of the end surface 10C on the main surface 10B side is made small but a crack length in a region on the main surface 10A side with respect to the region on the main surface 10B side is not made so small, a decrease in impact resistance can be prevented while reducing the change in dimension and the polishing time without excessively increasing the polishing degree. This will be specifically described below.

(Fracture Stress)

Fracture stress of the glass sheet 10 (a maximum stress at a limit at which the glass can withstand without being fractured) depends on the length of the crack formed in the glass sheet 10. In the present embodiment, regarding the glass sheet 10 in the case where the chemical strengthening by the compressive stress layer 12 is not taken into consideration, a relation between a length a ($\mu$m) of a crack in the end surface 10C and fracture stress $\sigma_{FS}$(a) is expressed as in formula (1). That is, the formula (1) indicates the maximum stress of the limit that the glass sheet 10 can withstand without being fractured for each length a of the crack formed in the end surface 10C when the compressive stress layer 12 is not taken into consideration.

The length of the crack in the present embodiment refers to a length of the crack in a direction perpendicular to the surface on which the crack is formed, unless otherwise specified. That is, for example, a length of a crack at a position on the tapered surface portion 10C1 indicates a length of the crack in a direction orthogonal to the tapered surface portion 10C1, and a length of a crack at a position on the side surface 10C2 indicates a length of the crack in a direction orthogonal to the side surface 10C2.

[Math. 3]

$$\sigma_{FS}(a) = \frac{K_{IC}}{\sqrt{\pi a} \cdot F} \qquad \cdots (1)$$

Here, $K_{IC}$ represents the fracture toughness value (MPa·m$^{0.5}$), and F represents the correction coefficient of the stress intensity factor. In the present embodiment, F may be expressed as 1.1215.

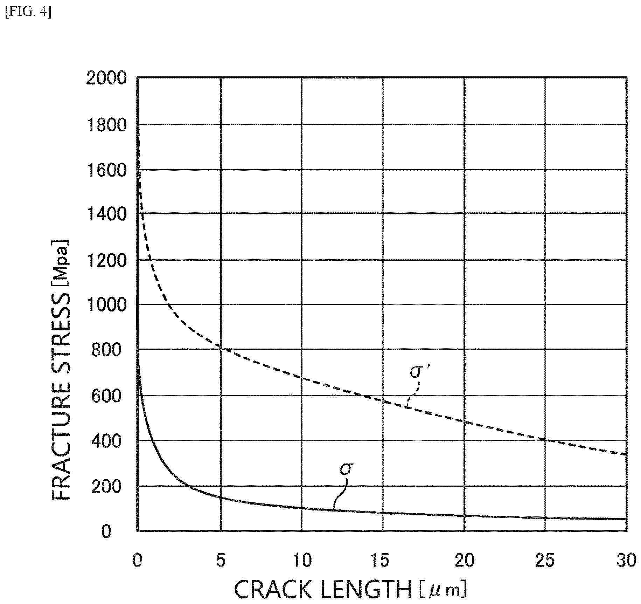

FIG. 4 is a graph illustrating an example of a relation between the length of the crack and the fracture stress. The horizontal axis in FIG. 4 represents the length a of the crack, and the vertical axis represents the fracture stress. The line segment $\sigma$ in FIG. 4 indicates a relation between the length a ($\mu$m) of the crack in the end surface 10C and the fracture stress $\sigma_{FS}$(a), regarding the glass sheet 10 in the case where the chemical strengthening by the compressive stress layer 12 is not taken into consideration. That is, the line segment $\sigma$ expresses the formula (1) as a curve. Here, the line segment $\sigma$ in FIG. 4 illustrates an example in the case where the fracture toughness value $K_{IC}$ is 0.75 (MPa·m$^{0.5}$).

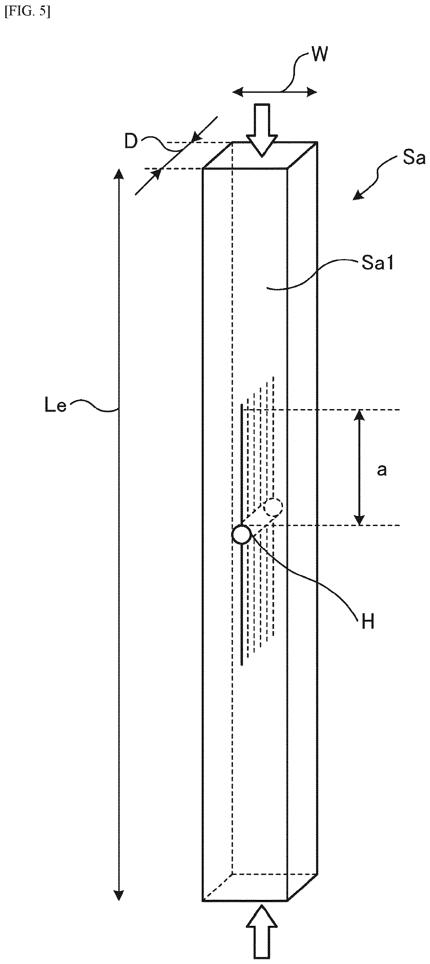

Any value may be used as the fracture toughness value $K_{IC}$, and for example, a value obtained using a double cleavage drilled compression (DCDC) method may be used. FIG. 5 is a diagram illustrating a shape of a test piece of the DCDC method.

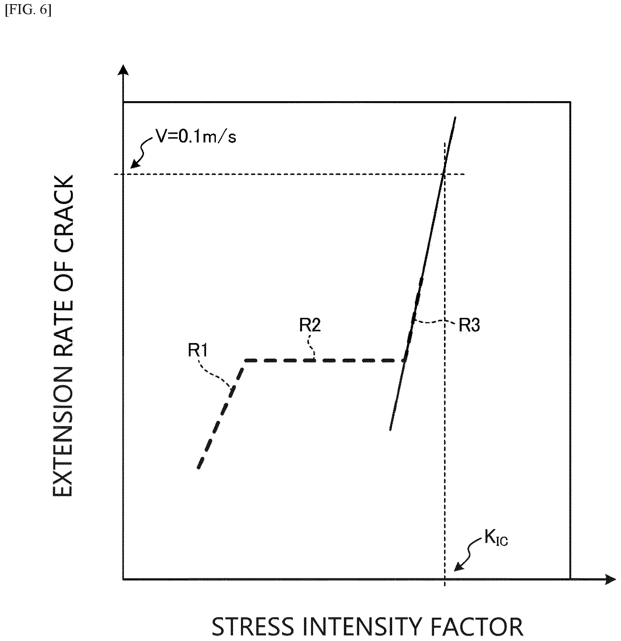

FIG. 6 is a schematic diagram of a $K_I$-V curve. In the DCDC method, as illustrated in FIG. 5, a sample Sa having the same composition as the glass sheet 10, and having a size of a width W of 7.5 mm, a length D of 6.5 mm, and a height Le of 75 mm is prepared. Then, an opening H having a radius R of 1 mm is formed on a surface Sa1 along the height Le and the width W of the sample Sa. The opening H penetrates along a direction orthogonal to the surface Sa1 from the surface Sa1 to the surface opposite to the surface Sa1.

The opening H is formed at a center position of the surface Sa1 such that a center point of the opening H matches with the center position of the surface Sa1. Then, a compressive stress is applied to the sample Sa in a direction along the height Le by using Tensilon UTA-5kN manufactured by ORIENTEC CO., LTD., and a curve indicating a relation between a stress intensity factor KI (MPa·m$^{0.5}$) and an extension rate v (m/s) of the crack propagating from the opening H is measured. FIG. 6 is an example of the curve showing the relation between the stress intensity factor KI (MPa·m$^{0.5}$) and the extension rate v (m/s).

In the present embodiment, the curve measured as illustrated in FIG. 6 is divided into regions R1, R2, and R3. The region R1 is a region where a crack extension rate increases as the stress intensity factor increases. The region R2 is a region where the stress intensity factor is higher than that of the region R1, and is a region where an increase rate of the crack extension rate accompanying an increase in the stress intensity factor is smaller than that of the region R1. The region R3 is a region where the stress intensity factor is higher than that of the region R2, and is a region where the increase rate of the crack extension rate accompanying the increase in the stress intensity factor is larger than that of the region R2.

In the present embodiment, a straight line R3a is calculated by regression and extrapolation of data of the region R3 by a linear expression, and the stress intensity factor KI at which the extension rate v of the crack is 0.1 m/s on the straight line R3a is set as the fracture toughness value $K_{IC}$ of the glass sheet 10.

The fracture stress $\sigma_{FS}(a)$ described above is fracture stress in the case where the compressive stress layer 12 is not taken into consideration. The present inventors have found that the fracture stress of the glass sheet 10 taking the compressive stress layer 12 into consideration can be calculated with high accuracy by adding an average value of values of the compressive stress from the surface of the glass sheet 10 to a depth corresponding to the length a of the crack, with respect to the fracture stress $\sigma_{FS}(a)$.

That is, in the present embodiment, a relation between the length a ($\mu$m) of the crack in the end surface 10C and a fracture stress $\sigma'_{FS}(a)$ in the glass sheet 10 in the case where the chemical strengthening by the compressive stress layer 12 is taken into consideration is expressed as in formula (2). It can be said that the formula (2) indicates the maximum stress of the limit that the glass sheet 10 can withstand without being fractured for each length a of the crack formed in the end surface 10C of the glass sheet 10 on which the compressive stress layer 12 is formed.

[Math. 4]

$$\sigma'_{FS}(a) = \frac{K_{IC}}{\sqrt{\pi a} \cdot F} + \frac{1}{a} \int_0^a f(x) dx \qquad \cdots (2)$$

Here, f(x) indicates a compressive stress (MPa) acting on the glass sheet 10 at a position of a depth x from the surface of the glass sheet 10. That is, in the formula (2), a value obtained by adding, with respect to the fracture stress $\sigma_{FS}(a)$ in the case where the compressive stress layer 12 is not taken into consideration, a value obtained by dividing, by the length a, an integral value of the compressive stress (MPa) acting on the glass sheet 10 by the compressive stress layer 12 from the surface of the glass sheet 10 to a position of the depth a from the surface of the glass sheet 10, is set as the fracture stress $\sigma'_{FS}(a)$.

Further, f(x), that is, the compressive stress at each position may be measured by measuring a strain in the glass sheet 10 by using a photoelasticity analysis method. In the present embodiment, f(x) may be measured by using, for example, an FSM-6000LE which is a surface stress meter manufactured by Orihara Manufacturing Co., LTD.

A line segment $\sigma'$ in FIG. 4 indicates a relation between the length a ($\mu$m) of the crack in the end surface 10C and the fracture stress $\sigma'_{FS}(a)$ in the glass sheet 10 in the case where the chemical strengthening by the compressive stress layer 12 is taken into consideration. That is, the line segment $\sigma'$ expresses the formula (2) as a curve.

However, the line segment $\sigma'$ in FIG. 4 is an example in which f(x) in the case where the fracture toughness value $K_{IC}$ is 0.75 (MPa·m$^{0.5}$), the surface compressive stress CS is 757 MPa, and the depth DOL is 28.8 $\mu$m, is used.

The glass sheet 10 according to the present embodiment preferably has a crack length distribution of the end surface 10C such that, even when an assumed maximum tensile stress acts thereon, the maximum tensile stress does not exceed the fracture stress $\sigma'_{FS}(a)$. That is, the crack length over the entire region of the end surface 10C of the glass sheet 10 according to the present embodiment is set to a length at which the assumed maximum tensile stress does not exceed the fracture stress $\sigma'_{FS}(a)$.

Hereinafter, the maximum value among crack lengths at which the assumed maximum tensile stress does not exceed the fracture stress $\sigma'_{FS}(a)$, that is, the crack length at which the assumed maximum tensile stress becomes the same value as the fracture stress $\sigma'_{FS}(a)$ is appropriately referred to as an allowable crack length.

(Allowable Crack Length)

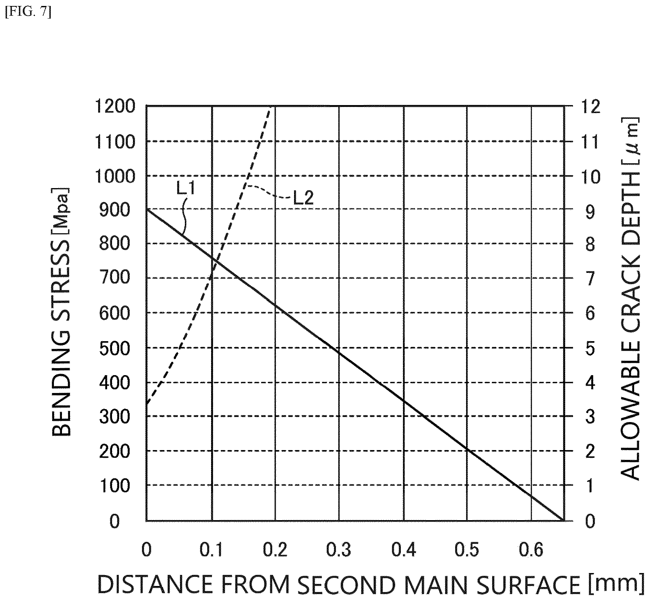

The allowable crack length will be described more specifically. FIG. 7 is a diagram illustrating an example of the bending stress acting on the glass sheet and the allowable crack length. The horizontal axis in FIG. 7 represents a distance (mm) from the second main surface (main surface 10B) along the thickness direction of the glass sheet 10. That is, for example, the horizontal axis of 0 mm indicates a position on the main surface 10B of the glass sheet 10, and the horizontal axis of 0.1 mm indicates a location of the glass sheet 10 separated by 0.1 mm from the main surface 10B on the opposite side to the Z direction.

The line L1 in FIG. 7 indicates an example of the bending stress (tensile stress) at each position in the Z direction of the glass sheet 10 when an external force acts on the glass sheet 10, and can be said to indicate bending stress distribution of the glass sheet 10 in the Z direction. As indicated by the line L1, the bending stress acting on the glass sheet 10 becomes maximum on the main surface 10B and linearly decreases toward the opposite side to the Z direction.

In the present embodiment, as indicated by the line L1, the maximum bending stress acting on the main surface 10B of the glass sheet 10, that is, the assumed maximum tensile stress is set to 900 MPa. In addition, a degree of decrease in the bending stress (tensile stress) toward the opposite side to the Z direction, that is, inclination of the line L1 may be set to any value, and may be calculated based on a measurement value of the bending stress at each position when an external force is applied to a sample made of the same material as the glass sheet 10, for example.

In the present embodiment, the assumed maximum tensile stress is set to 900 MPa. By designing on the assumption that the maximum tensile stress is 900 MPa, sufficient strength can be obtained even in the case of, for example, the glass sheet being mounted on an on-vehicle display device. However, the maximum tensile stress is not limited to the assumption of 900 MPa, and may be appropriately set according to a use situation or the like.

The allowable crack length is set for each position along the Z direction of the glass sheet 10. The allowable crack length is set based on the bending stress (tensile stress) at each position when the assumed maximum bending stress (tensile stress) is applied to the main surface 10B of the glass sheet 10, and the fracture stress $\sigma'_{FS}(a)$ at each crack length a.

Specifically, the allowable crack length at a certain position in the Z direction of the glass sheet 10 is the length a of the crack where the fracture stress $\sigma'_{FS}(a)$ is the same value as the assumed maximum tensile stress acting on the position, and the length a indicates the crack length in a direction perpendicular to a surface of the position.

For example, the line L2 in FIG. 7 indicates an example of the allowable crack length for each position. The line L2 is set based on the line L1 in FIG. 7 and the line segment $\sigma'$ in FIG. 4. That is, the line L2 represents the allowable crack length at each position along the Z direction of the glass sheet 10 in the case where distribution of the bending stress at each position is the line L1 in FIG. 7 and the fracture stress $\sigma'_{FS}(a)$ at each crack length a is the line segment $\sigma'$ in FIG. 4.

For example, as indicated by the line L1, tensile stress of 900 MPa acts at a position at a distance of 0 mm from the second main surface (main surface 10B), that is, at a boundary position between the main surface 10B and the end surface 10C. In this case, as indicated by the line segment $\sigma'$ in FIG. 4, the crack length at which 900 MPa is the fracture stress $\sigma'_{FS}(a)$ is about 3.2 $\mu$m. Therefore, at the position at the distance of 0 mm from the main surface 10B, an allowable crack length in a direction orthogonal to the surface at the position (surface at the boundary position between the main surface 10B and the end surface 10C) is about 3.2 $\mu$m as indicated by the line L2 in FIG. 7.

For example, as indicated by the line L1, tensile stress of about 760 MPa acts at a position at a distance of about 0.1 mm from the second main surface. As indicated by the line segment $\sigma'$ in FIG. 4, the crack length at which about 760 MPa is the fracture stress $\sigma'_{FS}(a)$ is about 7 $\mu$m. Therefore, at the position at the distance of about 0.1 mm from the main surface 10B, an allowable crack length in a direction orthogonal to the surface at the position is about 7 $\mu$m as indicated by the line L2 in FIG. 7.

(Crack Length of Glass Sheet)

In the glass sheet 10 according to the present embodiment, the crack length over the entire region of the end surface 10C is preferably equal to or less than the allowable crack length. That is, the glass sheet 10 according to the present embodiment is set such that the length of the crack at each position along the Z direction from the end portion on the main surface 10B side to the end portion on the main surface 10A side of the end surface 10C is equal to or less than the allowable crack length at the respective position (equal to or less than the line L2 in FIG. 7 in the example of the present embodiment).

In other words, in the glass sheet 10 according to the present embodiment, from the end portion on the main surface 10B side to the end portion on the main surface 10A side of the end surface 10C, the length of the crack in the direction orthogonal to the surface of the position at each position along the Z direction is equal to or less than the length a of the crack in the following formula (3).

Further, x represents the distance from the main surface 10B, and $\sigma(x)$ represents an assumed maximum tensile stress acting on a location at the distance x from the surface. That is, $\sigma(x)$ corresponds to the line L1 in FIG. 7.
[Math. 5]

$$ \sigma'_{FS}(a) = \frac{K_{IC}}{\sqrt{\pi a} \cdot F} + \frac{1}{a} \int_0^a f(x)dx = \sigma(x) \qquad \cdots (3) $$

In addition, in the glass sheet 10 according to the present embodiment, it is preferable that a maximum value of a length of a crack in a direction orthogonal to a surface on a position where the crack is formed within a first region of the end surface 10C is shorter than a maximum value of a length of a crack in a direction orthogonal to a surface on a position where the crack is formed within a second region of the end surface 10C. The first region is a region of a predetermined distance on a Z direction side from the end portion on the main surface 10B side, and the second region is a region on the Z direction side with respect to the first region.

That is, in the glass sheet 10 according to the present embodiment, the crack length in the first region in the vicinity of the main surface 10B is shortened, so that it is possible to prevent a fracture from the vicinity of the main surface 10B where the tensile stress increases.

In the glass sheet 10 according to the present embodiment, the crack length in the second region separated from the main surface 10B is left as being relatively long, so that it is possible to eliminate a need for polishing on a location where the tensile stress is relatively small. Therefore, according to the glass sheet 10 of the present embodiment, it is possible to prevent a decrease in impact resistance while reducing the change in dimension and the polishing time without excessively increasing the polishing degree.

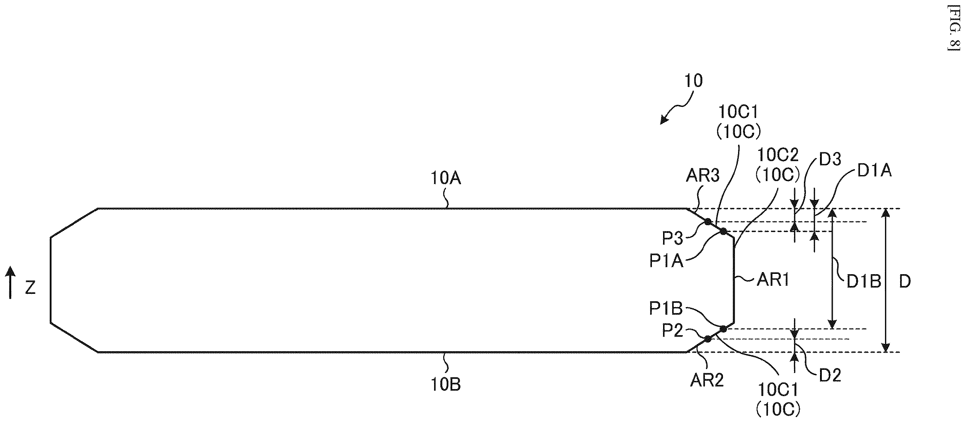

Hereinafter, the crack length of the end surface 10C of the glass sheet 10 will be described more specifically. FIG. 8 is a diagram for illustrating the crack length of the end surface of the glass sheet according to the embodiment.

As illustrated in FIG. 8, in the glass sheet 10 according to the present embodiment, the length of the longest crack in a region AR1 of the end surface 10C in a direction orthogonal to the surface at the position where the crack is formed is 5 $\mu$m or more and 20 $\mu$m or less, preferably 6 $\mu$m or more and 18 $\mu$m or less, and more preferably 7 $\mu$m or more and 15 $\mu$m or less.

In other words, when a crack having the longest length in the direction orthogonal to the surface at the position where the crack is formed among cracks formed in the region AR1 is defined as the longest crack, the length of the longest crack in the direction orthogonal to the surface at the position where the longest crack is formed is within the above-mentioned numerical ranges.

In the example of FIG. 8, the region AR1 refers to a region of the end surface 10C from a position P1A to a position P1B in the Z direction. That is, the region AR1 refers to a region from the position P1A to the position P1B along the Z direction in the entire region of the end surface 10C.

The position P1A is a position on the end surface 10C that is separated by a length D1A from the end portion on the main surface 10A side of the end surface 10C toward the opposite side to the Z direction (main surface 10B side). The length D1A is 9%, preferably 6% of the thickness D of the glass sheet 10. In addition, the length D1A may be a length of 6% or more and 9% or less of the thickness D of the glass sheet 10.

The position P 1B is a position on the end surface 10C that is separated by a length D 1B from the end portion on the main surface 10A side of the end surface 10C toward the opposite side to the Z direction (main surface 10B side).

The length D1B is 91%, preferably 94% of the thickness D of the glass sheet 10. In addition, the length D1B may be a length of 91% or more and 94% or less of the thickness D of the glass sheet 10.

In the example of FIG. 8, the position P1A is on the tapered surface portion 10C1 on the Z direction side, and the position P1B is on the tapered surface portion 10C1 on the opposite side to the Z direction, but the present invention is not limited thereto. For example, the position P1A may be at a boundary position between the tapered surface portion 10C1 on the Z direction side and the side surface 10C2, or may be on the side surface 10C2.

Similarly, the position P1B may be at a boundary position between the tapered surface portion 10C1 on the opposite side to the Z direction and the side surface 10C2, or may be on the side surface 10C2.

In addition, in the glass sheet 10 according to the present embodiment, it is preferable that the length of the longest crack in a region AR2 of the end surface 10C in a direction orthogonal to the surface at the position where the crack is formed is smaller than the length a of the crack represented by the following formula (4).

In other words, when a crack having the longest length in the direction orthogonal to the surface at the position where the crack is formed among cracks formed in the region AR2 is defined as the longest crack, the length of the longest crack in the direction orthogonal to the surface at the position where the longest crack is formed is smaller than the length a of the crack represented by the formula (4). That is, in the region AR2, the length of the crack is set such that the fracture stress $\sigma'_{FS}(a)$ is larger than the assumed maximum tensile stress of 900 MPa.

[Math. 6]

$$\sigma'_{FS}(a) = \frac{K_{IC}}{\sqrt{\pi a} \cdot F} + \frac{1}{a}\int_0^a f(x)dx = 900MPa \qquad \cdots (4)$$

In the example of FIG. 8, the region AR2 refers to a region of the end surface 10C from the end portion on the main surface 10B side to a position P2 in the Z direction. That is, the region AR2 refers to a region from the end portion on the main surface 10B side to the position P2 in the Z direction in the entire region of the end surface 10C. The position P2 is a position on the end surface 10C that is separated by a length D2 from the end portion on the main surface 10B side of the end surface 10C toward the Z direction side (main surface 10A side). The length D2 is 6%, preferably 9% of the thickness D of the glass sheet 10. In addition, the length D2 may be 6% or more and 9% or less of the thickness D of the glass sheet 10.

The position P2 is a position different from the position P 1B in the example of FIG. 8, but may refer to the same position as the position P1B in the Z direction. In addition, in the example of FIG. 8, the position P2 is on the tapered surface portion 10C1 on the opposite side to the Z direction, but the present invention is not limited thereto. For example, the position P2 may be at the boundary position between the tapered surface portion 10C1 on the opposite side to the Z direction and the side surface 10C2, or may be on the side surface 10C2.

As described above, in the glass sheet 10 according to the present embodiment, the length of the longest crack in the region AR1 is 5 $\mu$m or more and 20 $\mu$m or less, and the length of the longest crack in the region AR2 is smaller than the length a satisfying the formula (4). It is preferable that the region AR2 is a region formed by polishing, and the region AR1 is a region formed without being polished. In the glass sheet 10 according to the present embodiment, the crack length in the region AR2 in the vicinity of the main surface 10B is shortened, so that it is possible to prevent a fracture from the vicinity of the main surface 10B where the tensile stress increases.

In the glass sheet 10 according to the present embodiment, the crack length in the region AR1 separated from the main surface 10B is left relatively long, so that it is possible to eliminate the need for polishing on a location where the tensile stress is relatively small. Therefore, according to the glass sheet 10 of the present embodiment, it is possible to prevent a decrease in impact resistance while reducing the change in dimension and the polishing time without excessively increasing the polishing degree.

The glass sheet 10 according to the present embodiment satisfies definitions of the crack length defined in the above description in an entire section in a circumferential direction of the end surface 10C. That is, for example, the region AR1 of the glass sheet 10 (here, a region in which the longest crack length is 5 $\mu$m or more and 20 $\mu$m or less) is formed over the entire section in the circumferential direction of the end surface 10C, and the region AR2 of the glass sheet 10 (here, a region in which the longest crack length is smaller than the length a satisfying the formula (4)) is formed over the entire section in the circumferential direction of the end surface 10C.

However, the glass sheet 10 may satisfy the definitions of the crack length defined in the above description in at least a part of the section in the circumferential direction of the end surface 10C. That is, for example, the region AR1 of the glass sheet 10 (here, a region in which the longest crack length is 5 $\mu$m or more and 20 $\mu$m or less) is formed over a part of the section in the circumferential direction of the end surface 10C, and the region AR2 of the glass sheet 10 (here, a region in which the longest crack length is smaller than the length a satisfying the formula (4)) is formed over a part of the section in the circumferential direction of the end surface 10C.

In the above description and the following description, unless otherwise specified, the definition of the crack length of the end surface 10C of the glass sheet 10 may similarly refer to the entire region in the circumferential direction or refer to a part of the section in the circumferential direction.

In the present embodiment, the part of the section in the circumferential direction of the end surface 10C may refer to the same section unless otherwise specified.

In the case where only a part of the section of the end surface 10C satisfies the definitions of the crack length, for example, an embodiment is preferable in which only one side satisfies the definitions of the crack length.

In the case where the glass sheet 10 according to the present embodiment is used as a cover member of an on-vehicle display device as illustrated in FIG. 1, a head of a driver is likely to collide with an upper side (side on an upper side in the vertical direction) of the cover member. Therefore, it is preferable that a side corresponding to the upper side of the cover member satisfies the definitions of the crack length since deterioration of the crack from the upper side of the cover member at the time of impact can be prevented.

On the other hand, since a lower side and lateral sides of the cover member are less likely to receive an impact than the upper side, cost can be reduced by omitting polishing of these portions. Therefore, for example, it is preferable that only a side corresponding to the upper side when the glass sheet 10 is attached as a cover member satisfies the definitions of the crack length. In addition, for example, only the upper side and an upper potion in the lateral side may satisfy the definitions of the crack length, and both the upper side and the lateral sides may satisfy the definitions of the crack length.

(Crack Length Measurement Method)

The length of the longest crack of the glass sheet 10 can be measured by any method, and can be determined based on, for example, a change in dimension at the time when the crack is no longer confirmed by observing presence or absence of the crack while trimming a region where the length of the longest crack is measured. Specifically, it can be measured by the following method.

First, an evaluation region (region where the length of the longest crack is measured) of the glass sheet 10 is polished by a predetermined amount, and then washed and dried, and a work-affected layer that has become a circular pit or an elliptical pit by etching is observed with an optical microscope.

Here, the "work-affected layer" refers to a layer in which scratches, cracks, and the like generated in the glass sheet in a processing process such as chamfering and grinding exist.

As the optical microscope, a laser microscope LEXT OLS5000 manufactured by Olympus Corporation having an objective lens of 50 times magnification may be used, and observation may be performed in an observation field of view of 258 $\mu$m $\times$ 258 $\mu$m.

This process (confirmation of latent scratches by polishing and etching) is repeated a plurality of times, and the etching amount of the glass sheet 10 at the time when the circular pit or the elliptical pit is no longer observed on the evaluation region is defined as the "length of the longest crack".

The "etching" may be performed at room temperature (25°C) by immersing the entire glass sheet in an etchant. As the etchant, an aqueous solution containing 5 mass% of hydrofluoric acid (HF) and 95 mass% of pure water may be used.

In the measurement of the length of the longest crack, an entire region of a region defining the length of the longest crack may be set as the evaluation region (region where the length of the longest crack is measured). That is, for example, the entire region AR1 or the entire region AR2 may be set as the evaluation region.

However, the present invention is not limited thereto, and a part of the region defining the length of the longest crack, that is, for example, a part of the region AR1 or a part of the region AR2 may be set as the evaluation region. In this case, on an assumption that the same surface (polished surface and unpolished surface) is uniform, as a simple evaluation, in the case where a polished surface is included in the region (region AR1, AR2, or the like) defining the length of the longest crack, a range of 5.0 mm$^2$ of a central area of the polished surface may be defined as the evaluation region.

In the case where there are a plurality of polished surfaces, an evaluation region is set for each of the polished surfaces. In addition, in the case where an unpolished surface is included in the region defining the length of the longest crack, a range of 5.0 mm$^2$ of a central area of the unpolished surface may be defined as the evaluation region. That is, a region having an area of about 5.0 mm$^2$ in the vicinity of a central portion of each of the surfaces in different states may be set as the evaluation region, and the length of the crack may be measured within.

(Surface Roughness of End Surface of Glass Sheet)

In the glass sheet 10, an arithmetic average roughness Ra (surface roughness) in the region AR1 of the end surface 10C is preferably 140 $\mu$m or more, more preferably 170 $\mu$m or more, and still more preferably 210 $\mu$m or more.

An upper limit thereof is not particularly limited, but is, for example, 500 nm or less, and preferably 400 nm or less. In the glass sheet 10, an arithmetic average roughness Ra (surface roughness) in the region AR2 of the end surface 10C is preferably 70 nm or less, more preferably 30 nm or less, and still more preferably 10 nm or less.

The arithmetic average roughness Ra refers to an arithmetic average roughness Ra defined in JIS B 0601:2001.

(Another Example of Crack Length of Glass Sheet)

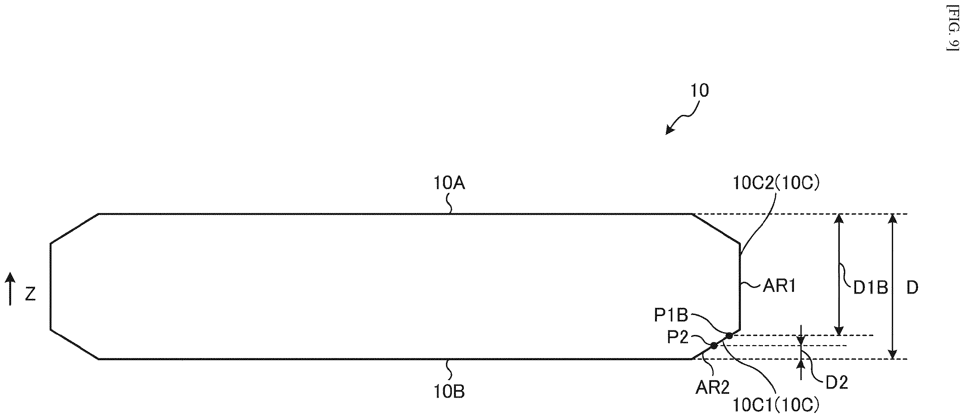

FIG. 9 is a diagram for illustrating a crack length of an end surface of a glass sheet according to another example of the present embodiment. As illustrated in FIG. 9, in the glass sheet 10 according to the present embodiment, the region AR1 may refer to a region of the end surface 10C from the end portion on the main surface 10A side to the position P 1B in the Z direction. That is, the region AR1 may refer to a region from the end portion on the main surface 10A side to the position P1B in the Z direction in the entire region of the end surface 10C.

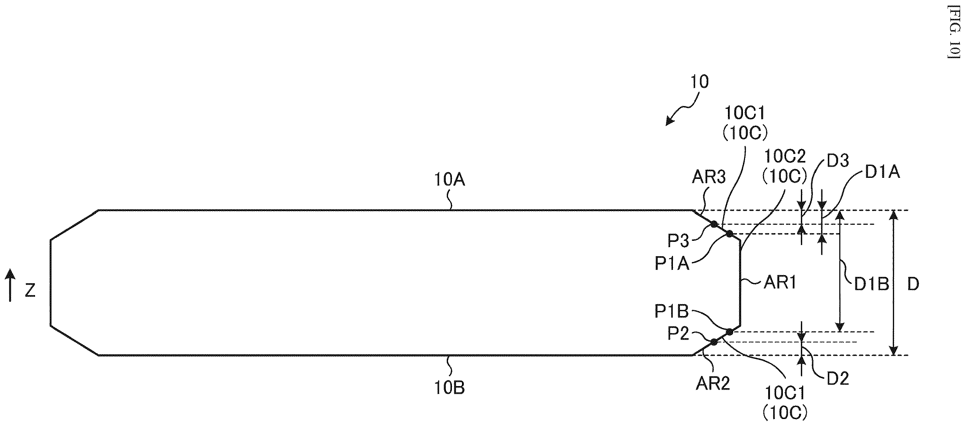

FIG. 10 is a diagram for illustrating a crack length of an end surface of a glass sheet according to another example of the present embodiment.

In the glass sheet 10 illustrated in FIG. 10, the region AR1 is the region from the position P1A to the position P1B as in the example of FIG. 8. On the other hand, the glass sheet 10 illustrated in FIG. 10 has a region AR3 on the Z direction side with respect to the region AR1. It is preferable that the length of the longest crack in the region AR3 of the end surface 10C in a direction orthogonal to the surface at the position where the crack is formed is smaller than the length a of the crack represented by the above formula (4).

In other words, when a crack having the longest length in the direction orthogonal to the surface at the position where the crack is formed among cracks formed in the region AR3 is defined as the longest crack, it is preferable that the length of the longest crack in the direction orthogonal to the surface at the position where the longest crack is formed is smaller than the length a of the crack represented by the above formula (4).

That is, in the region AR3, similarly to the region AR2, the length of the crack is set such that the fracture stress $\sigma'_{FS}(a)$ is larger than the assumed maximum tensile stress of 900 MPa. The region AR3 is preferably formed by polishing. An arithmetic average roughness Ra of the region AR3 may be the same as that of the region AR2.

The region AR3 refers to a region of the end surface 10C from the end portion on the main surface 10A side to a position P3 in the Z direction. That is, the region AR3 refers to a region from the end portion on the main surface 10A side to the position P3 in the Z direction in the entire region of the end surface 10C.

The position P3 is a position on the end surface 10C that is separated by a length D3 from the end portion on the main surface 10A side of the end surface 10C toward the opposite side to the Z direction (main surface 10B side). The length D3 is preferably 6%, more preferably 9% of the thickness D of the glass sheet 10. In addition, the length D3 may be 6% or more and 9% or less of the thickness D of the glass sheet 10. In the example of FIG. 10, the position P3 is a position different from the position P1A, but may refer to the same position as the position P1A in the Z direction.

In addition, in the example of FIG. 10, the position P3 is on the tapered surface portion 10C1 on the Z direction side, but the present invention is not limited thereto. For example, the position P2 may be at a boundary position between the tapered surface portion 10C1 on the Z direction side and the side surface 10C2, or may be on the side surface 10C2.

As described above, in the glass sheet 10, the length of the crack may be left relatively long without polishing the region in the vicinity of the main surface 10A as illustrated in FIG. 9, or the length of the crack may be shortened by polishing the region in the vicinity of main surface 10A as illustrated in FIG. 10.

(Functional Film)

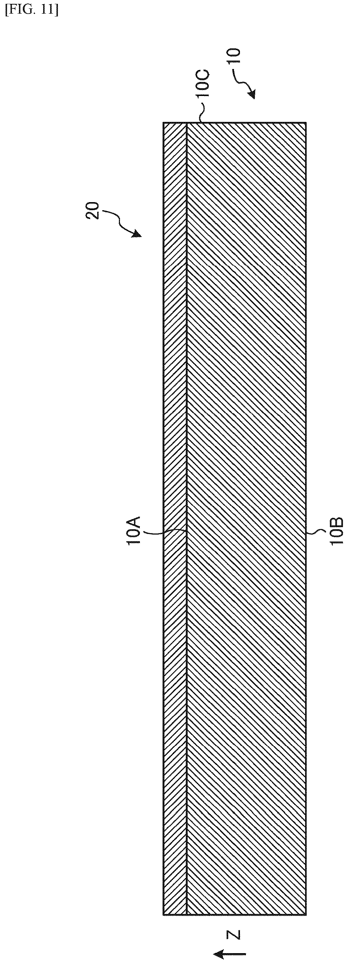

FIG. 11 is a schematic cross-sectional view of the glass sheet and a functional film. As illustrated in FIG. 1, a functional film 20 may be formed on the surface of the glass sheet 10. In the example of FIG. 1, the functional film 20 is formed on the main surface 10A of the glass sheet 10. Since the thickness of the functional film 20 is very small, a total thickness of the functional film 20 and the glass sheet 10 may be taken as the thickness D of the glass sheet 10 in the present invention.

The functional film 20 may be formed by treating a surface layer of the glass sheet 10, or may be formed by laminating another layer on the surface of the glass sheet 10.

Examples of the functional film 20 include an antiglare layer, an antireflection layer, a light-shielding layer, an antifouling layer, and an antibacterial layer. That is, on the glass sheet 10, at least one of an antiglare layer, an antireflection layer, a light-shielding layer, an antifouling layer, and an antibacterial layer is formed as the functional film 20.

In other words, on the glass sheet 10, as the functional film 20, all of the antiglare layer, the antireflection layer, the light-shielding layer, the antifouling layer, and the antibacterial layer may be laminated, or some of the antiglare layer, the antireflection layer, the light-shielding layer, the antifouling layer, and the antibacterial layer may be laminated. By forming the functional film 20 on the glass sheet 10, the glass sheet 10 can appropriately function as an on-vehicle display device.

The antireflection layer is a layer that reduces reflectance and reduces glare caused by reflection of external light. In addition, when a glass sheet having an antireflection layer is used, transmittance of light from a display panel can be improved, and a display image can be made clear.

A material of the antireflection layer is not particularly limited, and various materials can be used as long as those can prevent reflection of light, for example, a configuration in which a high-refractive-index layer and a low-refractive-index layer are laminated may be adopted. Here, the high-refractive-index layer is a layer having a refractive index of 1.9 or more at a wavelength of 550 nm, and the low-refractive-index layer is a layer having a refractive index of 1.6 or less at the wavelength of 550 nm.

The high-refractive-index layer and the low-refractive-index layer may be in a form including one layer each or in a form including two or more layers each. In the case where the high-refractive-index layer and the low-refractive-index layer are included two or more layers each, it is preferable that the high-refractive-index layers and the low-refractive-index layers are alternately laminated.

Materials of the high-refractive-index layer and the low-refractive-index layer are not particularly limited, and can be selected in consideration of a required degree of antireflection, productivity, and the like.

As the material constituting the high-refractive-index layer, for example, a material containing one or more selected from a group consisting of niobium, titanium, zirconium, tantalum, and silicon can be preferably used. Specific examples thereof include niobium oxide ($Nb_2O_5$), titanium oxide ($TiO_2$), zirconium oxide ($ZrO_2$), tantalum oxide ($Ta_2O_5$), and silicon nitride.

As the material constituting the low-refractive-index layer, for example, a material containing silicon can be preferably used. Specific examples thereof include silicon oxide ($SiO_2$), a material containing a mixed oxide of Si and Sn, a material containing a mixed oxide of Si and Zr, and a material containing a mixed oxide of Si and Al.

A method for forming the antireflection layer is not particularly limited, and various methods can be used. In particular, the antireflection layer is preferably formed by a method such as pulse sputtering, AC sputtering, or digital sputtering.

A thickness of the antireflection layer is, for example, about 100 nm to 300 nm.

The antiglare layer is a layer that reduces glare of reflected light due to reflection of a light source by scattering external light. When a glass sheet including an antiglare layer is provided on a display panel, at a time of viewing a display image on the display panel, the display image can be clearly viewed since reflection of external light can be reduced.

A method for forming the antiglare layer is not particularly limited, and examples thereof include a method for etching a surface layer of glass, and a method for applying a coating solution containing fine particles and a matrix to a surface of glass and curing the matrix.

The antifouling layer is a layer that prevents adhesion of an organic substance or an inorganic substance.

Alternatively, the antifouling layer is a layer in which an adhering substance can be easily removed by cleaning such as wiping even when an organic substance or an inorganic substance adheres. In the case where the antifouling layer is provided, no fingerprint remains even when the surface of the glass sheet 10 is touched, and the glass sheet 10 can be kept clean. Therefore, when viewing a display image on a display panel, the display image can be clearly viewed.

(Glass Sheet Manufacturing Method)

Next, a manufacturing method of the glass sheet 10 will be described. In the manufacturing method of the glass sheet 10, first, a glass base sheet is manufactured, the glass base sheet is subjected to a chemical strengthening treatment to form the compressive stress layer 12 on a surface of the glass base sheet, and an end surface of the glass base sheet is polished to form the region AR2, thereby manufacturing the glass sheet 10.

A manufacturing method of the glass base sheet according to the present manufacturing method is not particularly limited and is any method. Examples thereof include a down-draw method (for example, an overflow-down-draw method, a slot down method, and a redraw method), a float method, a roll-out method, and a press method.

In the present manufacturing method, a region on the main surface 10B side of the end surface of the manufactured glass base sheet is polished to form the region AR2, and a portion of the end surface that is not polished is set as the region AR1. In the case where the region AR3 on the main surface 10A side is to be formed as illustrated in FIG. 10, a region of the end surface of the glass base sheet on the main surface 10A side is also polished to form the region AR3. Thus, the glass sheet 10 is formed.

In the case where the tapered surface portion 10C1 is to be formed on the glass sheet 10, the tapered surface portion 10C1 is formed by chamfering, and then the region AR2 and/or the region AR3 are formed by polishing. However, the present invention is not limited thereto, and the region AR2 and/or the region AR3 may be formed while forming the tapered surface portion 10C1, by, for example, polishing.

In the present manufacturing method, the compressive stress layer 12 is formed by performing a chemical strengthening treatment on the polished glass base sheet. In the chemical strengthening treatment in the present embodiment, the compressive stress layer 12 is formed by bringing the manufactured glass sheet into contact with a molten salt containing alkali metal ions.

For example, in the present embodiment, the glass sheet is immersed in a solution of a molten salt containing alkali metal ions having a large ionic radius, here, a solution of potassium nitrate containing K ions. Thus, metal ions (here, Na ions) in the glass sheet having a smaller ionic radius than the alkali metal ions contained in the molten salt are substituted with the alkali metal ions contained in the molten salt, and compressive stress is generated on the surface of the glass sheet due to a difference in an occupied area of the alkali metal ions, thereby forming the compressive stress layer 12.

In the present embodiment, a heating temperature of the molten salt (solution of the molten salt) brought into contact with the glass base sheet is preferably 370°C to 480°C, and more preferably 400°C to 450°C. In the present embodiment, a contact time between the glass base sheet and the molten salt is preferably 0.5 hours to 32 hours, and more preferably 3 hours to 6 hours.

Further, as the molten salt to be brought into contact with the glass base sheet, a salt containing potassium ions is preferably used. Examples of the molten salt to be brought into contact with the glass base sheet include, alkali nitrates, alkali sulfates, and alkali chlorides, such as potassium nitrate, potassium sulfate, potassium carbonate, and potassium chloride. These molten salts may be used alone or in combination of a plural kinds thereof. In addition, in order to adjust chemical strengthening properties, a salt containing sodium (Na ion) and/or lithium (Li ion) may be mixed.

As described above, in the present manufacturing method, the compressive stress layer 12 is formed by the chemical strengthening treatment. Therefore, it can be said that the compressive stress layer 12 according to the present embodiment is a layer in which an alkali metal element having a small ionic radius is substituted with an alkali metal element having a larger ionic radius contained in the molten salt.

In other words, when the alkali metal element contained in the molten salt is referred to as a substitution element, in the glass sheet 10, the number of substitution elements contained in a unit volume of the compressive stress layer 12 is greater than the number of substitution elements contained in a unit volume of a layer other than the compressive stress layer 12. The substitution element referred to herein is, for example, potassium.

In the above description, the region that is not polished is set as the region AR1, but the region AR1 may be formed by polishing. Also in this case, the polishing degree of the region AR1 is smaller than the polishing degrees of the regions AR2 and AR3.

In the present manufacturing method, the region AR2 and the region AR3 are formed over the entire section in the circumferential direction by polishing over the entire section in the circumferential direction of the end surface 10C of the glass sheet 10, but the method is not limited to polishing over the entire section in the circumferential direction.

For example, in the present manufacturing method, the region AR2 and/or the region AR3 may be formed in a part of the section in the circumferential direction by polishing a part of the section in the circumferential direction of the end surface 10C of the glass sheet 10. For example, in the present manufacturing method, it is preferable to polish, among the entire section in the circumferential direction of the end surface 10C of the glass sheet 10, at least a section including the upper side in the vertical direction when the glass sheet 10 is mounted on a vehicle.

In this case, it can be said that the region AR2 and/or the region AR3 are preferably formed in, among the entire section in the circumferential direction of the end surface 10C of the glass sheet 10, at least the section including the upper side in the vertical direction when the glass sheet 10 is mounted on the vehicle.

(Effect)

As described above, the glass sheet 10 according to the present embodiment includes the main surface 10A as a first main surface, the main surface 10B as the second main surface, and the end surface 10C connecting the main surface 10A and the main surface 10B, and has the compressive stress layer 12.

In the end surface 10C, within at least a part of the section of the circumference of the main surfaces of the glass sheet 10 (that is, only a part of the section of the circumference of the main surfaces or the entire circumference of the main surfaces), the length of the longest crack in the direction perpendicular to the surface on which the crack is formed in the region AR1 is 5 $\mu$m or more and 20 $\mu$m or less, the region AR1 extending, from a location (position P1A) that is separated by a length of 9% of the thickness D of the glass sheet 10 from the end portion on the main surface 10A side of the end surface toward the main surface 10B side along the thickness direction (Z direction) of the glass sheet 10, to a location (position P1B) that is separated by a length of 91% of the thickness D of the glass sheet from the end portion on the main surface 10A side of the end surface 10C toward the main surface 10B side along the thickness direction (Z direction) of the glass sheet 10. In addition, in the end surface 10C, within at least a part of the section of the circumference of the main surfaces of the glass sheet 10, the length of the longest crack in the direction perpendicular to the surface on which the crack is formed in the region AR2 is smaller than a represented by the formula (4), the region AR2 extending, from the end portion on the main surface 10B side of the end surface 10C, to a location (position P2) that is separated by a length of 6% of the thickness D of the glass sheet 10 from the end portion on the main surface 10B side of the end surface 10C toward the main surface 10A side along the thickness direction (Z direction) of the glass sheet 10.

In the glass sheet 10 according to the present embodiment, the crack length in the region AR2 in the vicinity of the main surface 10B is shortened, so that it is possible to prevent a fracture from the vicinity of the main surface 10B where the tensile stress increases. In the glass sheet 10 according to the present embodiment, the crack length in the region AR1 separated from the main surface 10B is left relatively long, so that it is possible to eliminate the need for polishing or to reduce the polishing degree on a location where the tensile stress is relatively small. Therefore, according to the glass sheet 10 of the present embodiment, it is possible to prevent a decrease in impact resistance while reducing the change in dimension and the polishing time.

The glass sheet 10 according to the present embodiment can also have high impact resistance in a so-called head impact test. The head impact test is a test described in, for example, WO2016/194916.

It is preferable that in the end surface 10C, within at least a part of the section of the circumference of the main surfaces of the glass sheet 10 (that is, only a part of the section of the circumference of the main surfaces or the entire circumference of the main surfaces), the length of the longest crack in the direction perpendicular to the surface on which the crack is formed in the region AR1 is 5 $\mu$m or more and 20 $\mu$m or less, the region AR1 extending, from the end portion on the main surface 10A side of the end surface 10C, to a location (position P1B) that is separated by a length of 94% of the thickness D of the glass sheet 10 from the end portion on the main surface 10A side of the end surface 10C toward the main surface 10B side along the thickness direction (Z direction) of the glass sheet 10. In the glass sheet 10 according to the present embodiment, the crack length is left relatively long to the main surface 10A side, so that the change in dimension and the polishing time can be more suitably reduced.

It is preferable that in the end surface 10C, within at least a part of the section of the circumference of the main surfaces of the glass sheet 10 (that is, only a part of the section of the circumference of the main surfaces or the entire circumference of the main surfaces), the length of the longest crack in the direction perpendicular to the surface on which the crack of the region AR1 is formed in the region AR1 is 5 $\mu$m or more and 20 $\mu$m or less, the region AR1 extending, from the end portion on the main surface 10A side of the end surface 10C, to a location (position P1B) that is separated by a length of 91% of the thickness D of the glass sheet 10 from the end portion on the main surface 10A side of the end surface 10C toward the main surface 10B side along the thickness direction (Z direction) of the glass sheet 10. It is preferable that in the end surface 10C, the length of the longest crack in the direction perpendicular to the surface on which the crack is formed in the region AR2 is smaller than a represented by the formula (4), the region AR2 extending, from the end portion of the main surface 10B of the end surface 10C, to a location (position P2) that is separated by a length of 9% of the thickness D of the glass sheet 10 from the end portion of the main surface 10B of the end surface 10C toward the main surface 10A side along the thickness direction (Z direction) of the glass sheet 10. The glass sheet 10 according to the present embodiment can prevent a decrease in impact resistance while reducing the change in dimension and the polishing time.

It is preferable that in the end surface 10C, within at least a part of the section of the circumference of the main surfaces of the glass sheet 10 (that is, only a part of the section of the circumference of the main surfaces or the entire circumference of the main surfaces), the length of the longest crack in the direction perpendicular to the surface on which the crack is formed in the region AR3 is smaller than a represented by the formula (4), the region AR3 extending, from the end portion on the main surface 10A side of the end surface 10C, to a location (position P3) that is separated by a length of 9% of the thickness D of the glass sheet 10 from the end portion on the main surface 10A side of the end surface 10C toward the main surface 10B side along the thickness direction (Z direction) of the glass sheet 10. The glass sheet 10 according to the present embodiment can prevent a decrease in impact resistance by shortening the crack on the main surface 10A side.

The glass sheet 10 preferably has a surface compressive stress CS of 500 MPa or more and 1,200 MPa or less and a depth DOL of the compressive stress layer 12 of 10 $\mu$m or more and 100 $\mu$m or less. As a result, the glass sheet 10 can appropriately prevent a decrease in impact resistance.

The glass sheet 10 preferably contains, in terms of mol% based on oxides,

50% or more and 80% or less of $SiO_2$,
1% or more and 20% or less of $Al_2O_3$, and
6% or more and 20% or less of $Na_2O$. As a result, the glass sheet 10 can appropriately prevent a decrease in impact resistance.

The glass sheet 10 preferably has a thickness D of 0.5 mm or more and 3.0 mm or less, and the end surface 10C preferably includes the tapered surface portion 10C1. As a result, the glass sheet 10 can appropriately prevent a decrease in impact resistance.

The glass sheet 10 according to the present embodiment is preferably provided in an on-vehicle display device. In the glass sheet 10 for an on-vehicle display device, it is assumed that compressive stress acts on the main surface 10A side and tensile stress acts on the main surface 10B side in a situation such as when a head of an occupant collides with the main surface 10A in a collision accident or the like. Therefore, by using the glass sheet 10 according to the present embodiment for an on-vehicle display device, it is possible to appropriately impart impact resistance in accordance with a purpose of the on-vehicle display device.

It is preferable that in the end surface 10C, within a part of the section of the circumference of the main surfaces of the glass sheet 10, the length of the longest crack in the direction perpendicular to the surface on which the crack is formed in the region AR1 is 5 $\mu$m or more and 20 $\mu$m or less, the region AR1 extending, from a location (position P1A) that is separated by a length of 9% of the thickness D of the glass sheet 10 from the end portion on the main surface 10A side of the end surface toward the main surface 10B side along the thickness direction (Z direction) of the glass sheet 10, to a location (position P1B) that is separated by a length of 91% of the thickness D of the glass sheet from the end portion on the main surface 10A side of the end surface 10C toward the main surface 10B side along the thickness direction (Z direction) of the glass sheet 10. It is preferable that in the end surface 10C, within at least a part of the section of the circumference of the main surfaces of the glass sheet 10, the length of the longest crack in the direction perpendicular to the surface on which the crack is formed in the region AR2 is smaller than a represented by the formula (4), the region AR2 extending, from the end portion on the main surface 10B side of the end surface 10C, to a location (position P2) that is separated by a length of 6% of the thickness D of the glass sheet 10 from the end portion on the main surface 10B side of the end surface 10C toward the main surface 10A side along the thickness direction (Z direction) of the glass sheet 10. As a result, the glass sheet 10 can save a time required for polishing while improving the impact resistance.

It is preferable that in the end surface 10C, within the entire circumference of the main surfaces of the glass sheet 10, the length of the longest crack in the direction perpendicular to the surface on which the crack is formed in the region AR1 is 5 $\mu$m or more and 20 $\mu$m or less, the region AR1 extending, from a location (position P1A) that is separated by a length of 9% of the thickness D of the glass sheet 10 from the end portion on the main surface 10A side of the end surface toward the main surface 10B side along the thickness direction (Z direction) of the glass sheet 10, to a location (position P1B) that is separated by a length of 91% of the thickness D of the glass sheet from the end portion on the main surface 10A side of the end surface 10C toward the main surface 10B side along the thickness direction (Z direction) of the glass sheet 10. It is preferable that in the end surface 10C, within at least a part of the section of the circumference of the main surfaces of the glass sheet 10, the length of the longest crack in the direction perpendicular to the surface on which the crack is formed in the region AR2 is smaller than a represented by the formula (4), the region AR2 extending, from the end portion on the main surface 10B side of the end surface 10C, to a location (position P2) that is separated by a length of 6% of the thickness D of the glass sheet 10 from the end portion on the main surface 10B side of the end surface 10C toward the main surface 10A side along the thickness direction (Z direction) of the glass sheet 10. As a result, the glass sheet 10 can further improve the impact resistance.

It is preferable that the display device according to the present embodiment includes the glass sheet 10. By including the glass sheet 10, the display device can appropriately prevent a decrease in impact resistance.

The manufacturing method according to the present embodiment manufactures the glass sheet 10 that includes the main surface 10A as the first main surface, the main surface 10B as the second main surface, and the end surface 10C connecting the main surface 10A and the main surface 10B, and has the compressive stress layer 12. The present manufacturing method includes a step of setting, within at least a part of the section of the circumference of the main surfaces of the glass sheet 10, the length of the longest crack in the direction perpendicular to the surface on which the crack is formed in the region AR1 to 5 μm or more and 20 μm or less, the region AR1 extending, from a location (position P1A) that is separated by a length of 9% of the thickness D of the glass sheet 10 from the end portion on the main surface 10A side of the end surface 10C toward the main surface 10B side along the thickness direction (Z direction) of the glass sheet 10, to a location (position P 1B) that is separated by a length of 91% of the thickness D of the glass sheet from the end portion on the main surface 10A side of the end surface 10C toward the main surface 10B side along the thickness direction (Z direction) of the glass sheet 10.

In addition, the present manufacturing method includes a step of polishing the region AR2 such that the length of the longest crack in the direction perpendicular to the surface on which the crack is formed in the region AR2 is smaller than a represented by the formula (4), the region AR2 extending, from the end portion on the main surface 10B side of the end surface 10C, to a location (position P2) that is separated by a length of 6% of the thickness D of the glass sheet 10 from the end portion on the main surface 10B side of the end surface 10C toward the main surface 10A side along the thickness direction (Z direction) of the glass sheet 10. According to the present manufacturing method, it is possible to prevent a decrease in impact resistance while reducing the change in dimension and the polishing time without excessively increasing the polishing degree.

EXAMPLES

(Sample)

Next, Examples will be described. In Examples, samples of glass sheets each having a length of 94 mm, a width of 223 mm, and a thickness of 1.3 mm were prepared. The composition of the samples was as follows in terms of mol% based on oxides.

$SiO_2$: 64.4%
$Al_2O_3$: 8.0%
$ZrO_2$: 0.5%
$Na_2O$: 12.5%
$K_2O$: 4.0%
MgO: 10.5%
CaO: 0.1%
SrO: 0.1%
BaO: 0.1%

(Fracture Toughness Value)

The fracture toughness value $K_{IC}$ was 0.71 (MPa·m$^{0.5}$) as measured by the measurement method described in the present embodiment.

(Measurements of CS and DOL)

The surface compressive stress CS, the depth DOL of the compressive stress layer, and a strengthening profile f(x) representing distribution of compressive stress values in a depth direction of each sample were measured by using an FSM-6000LE which is a surface stress meter manufactured by Orihara Manufacturing Co., LTD.

(Measurement of Surface Roughness)

Arithmetic average roughness Ra of a polished portion and an unpolished portion of each sample was measured. As a measurement device, a laser microscope LEXT LS5000 manufactured by Olympus Corporation was used.

(Measurement of Longest Crack Length)

A crack length of each sample in Examples was measured by the method described in the present embodiment.

More specifically, the longest crack length of each sample was measured by setting a part of a region defining a length of the longest crack as an evaluation region. That is, on an assumption that the same surface (polished surface and unpolished surface) of the sample is uniform, as a simple evaluation, in the case where a polished surface was included in the region defining the length of the longest crack, a range of 5.0 mm$^2$ of a central area of the polished surface was set as the evaluation region.

In the case where there are a plurality of polished surfaces, an evaluation region was set for each of the polished surfaces. In addition, in the case where an unpolished surface was included in the region defining the length of the longest crack, a range of 5.0 mm$^2$ of a central area of the unpolished surface was defined as the evaluation region. That is, a region having an area of about 5.0 mm$^2$ in the vicinity of a central portion of each of the surfaces in different states was set as the evaluation region, and the length of the longest crack was measured.

(Evaluation of Polishing Time)

The polishing time was measured for each sample, and each sample was evaluated based on the polishing time.

(Evaluation of Dimensional Change Amount)

A change in dimension of the sample before and after polishing was measured, and each sample was evaluated based on the dimensional change amount. A measurement method of the change in dimension was performed by masking the sample before polishing with a polyethylene film to leave an unprocessed portion, and measuring a step between a processed portion and the unprocessed portion with a non-contact surface texture measuring device PF-60 manufactured by Mitaka Kohki Co., Ltd.

(Evaluation of Strength)

A strength of each sample was measured, and each sample was evaluated based on the strength. Specifically, evaluation was performed by a four-point bending test conforming to JISR1601:2008.

A distance between two support points was set to 40 mm, and a distance between two load points was set to 10 mm. In terms of bending strength, data was obtained from 20 test pieces. The four-point bending test was performed by using an Autograph AGS-X manufactured by Shimadzu Corporation.

Table 1 shows conditions and evaluation results of each example.

[Table 1]

Table 1

| | | Condition | | | |
|---|---|---|---|---|---|
| | | Chemical strengthening condition | | Fracture toughness value | Allowable crack length in second main surface | Polishing condition |
| | | CS (MPa) | DOL (μm) | KIC (MPa m$^{1/2}$) | a (μm) | Portion polished of end surface |
| Example 1 | | 747 | 31 | 0.71 | 3.1 | 0 mm to 0.12 mm from second main surface side |
| Example 2 | | 866 | 18.7 | 0.71 | 4.2 | 0 mm to 0.12 mm from second main surface side |
| Example 3 | | 747 | 31 | 0.71 | 3.1 | 0 mm to 0.12 mm from each of first main surface side and second main surface side |
| Example 4 | | 747 | 31 | 0.71 | 3.1 | (R chamfer) 0 mm to 0.12 mm from second main surface side |

(continued)

| | Condition | | | | |
|---|---|---|---|---|---|
| | Chemical strengthening condition | | Fracture toughness value | Allowable crack length in second main surface | Polishing condition |
| | CS (MPa) | DOL ($\mu$m) | KIC (MPa m$^{1/2}$) | a ($\mu$m) | Portion polished of end surface |
| Example 5 | 747 | 31 | 0.71 | 3.1 | None polishing |
| Example 6 | 747 | 31 | 0.71 | 3.1 | 0 mm to 0.07 mm from second main surface side |
| Example 7 | 747 | 31 | 0.71 | 3.1 | Entire end surface |
| Example 8 | 747 | 31 | 0.71 | 3.1 | 0 mm to 0.12 mm from second main surface side |

| | Condition | | | | Evaluation | |
|---|---|---|---|---|---|---|
| | Surface roughness Ra of end surface ($\mu$m) | | Longest crack length ($\mu$m) | | | |
| | Polished portion | Unpolished portion | Polished portion | Unpolished portion | Polishing time (min) | Change in outer diameter (mm) |
| Example 1 | 0.01 | 0.3 | 1.5 | 8 | 5.6 | 0.0 |
| Example 2 | 0.01 | 0.3 | 1.5 | 8 | 5.6 | 0.0 |
| Example 3 | 0.01 | 0.3 | 1.5 | 8 | 11.2 | 0.0 |
| Example 4 | 0.01 | 0.3 | 1.5 | 8 | 5.6 | 0.0 |
| Example 5 | - | 0.3 | - | 8 | 0.0 | 0.0 |
| Example 6 | 0.01 | 0.3 | 1.5 | 8 | 3.9 | 0.0 |
| Example 7 | 0.01 | - | 0.5 | - | 20.0 | 0.10 |
| Example 8 | 0.03 | 0.3 | 4.0 | 8 | 2.8 | 0.0 |

(Example 1)

In Example 1, the prepared sample was subjected to an end portion chamfering process using a chamfering wheel (grain size: #400 and #800) to form chamfered portions on a front side and a back side. (Angle: 45°, chamfering width: 0.23 mm)

Next, the chamfered portion on the back side was polished from a second main surface side to a position of 0.12 mm (9.2% of a sample thickness) by using a tape polishing machine. Tapes used were two types: abrasive grain of diamond having a grain size of #4,000; and abrasive grain of GC having a grain size of #10,000, and the former and the latter were used in this order. Tape widths were all 27 mm, processing conditions were set to a tape tension of 30N, an oscillation frequency of 20 Hz, an oscillation amplitude of $\pm$2 mm, a processing speed of 180 mm/min, and a tape feeding speed of 200 mm/min, and an angle at which the tape was applied was set to 30° with respect to the second main surface.

Thereafter, the obtained glass sheet was subjected to a chemical strengthening treatment.

The chemical strengthening treatment was performed by immersing the entire glass sheet in a $KNO_3$ molten salt such that the surface compressive stress (CS) in the compressive stress layer was 750 MPa and the depth (DOL) of the compressive stress layer was 30 $\mu$m.

Next, the glass sheet subjected to the chemical strengthening treatment was subjected to an acid treatment by being immersed in hydrochloric acid for 120 seconds, then washed with pure water several times, and then dried by air blowing. The hydrochloric acid used was obtained by preparing 13.4 mass% of hydrochloric acid (manufactured by Kanto Chemical Co., Inc.) in a beaker, and adjusting a temperature thereof to 40°C by using a water bath. Next, the glass sheet subjected to the acid treatment was subjected to an alkali treatment by being immersed in a sodium hydroxide aqueous solution for 120 seconds, then washed with pure water several times, and then dried by air blowing. The sodium hydroxide aqueous solution used was obtained by preparing 4.0 mass% of sodium hydroxide aqueous solution in a beaker, and adjusting a temperature thereof to 40°C by using a water bath.

In the sample of Example 1, the measured surface compressive stress CS and depth DOL were 747 MPa and 31 $\mu$m, respectively.

In Example 1, the length a of a crack satisfying the formula (4) (allowable crack length in the second main surface at a tensile stress of 900 MPa) was 3.1 $\mu$m.

In the sample of Example 1, the longest crack length of the polished portion was 1.5 $\mu$m, and the longest crack length of the unpolished portion was 8 $\mu$m.

(Examples 2 to 8)

Examples 2 to 8 are the same as Example 1 except that the polishing conditions of the end surface were changed to conditions shown in Table 1. The surface roughness, the longest crack length, the polishing time, and the dimensional change amount were the values shown in Table 1.

In Example 2, the measured surface compressive stress CS and depth DOL were 866 MPa and 18.7 $\mu$m respectively, and the length a of a crack satisfying the formula (4) (allowable crack length on the second main surface at a tensile stress of 900 MPa) was 4.2 $\mu$m.

In Example 3, the front chamfered portion was polished under the same conditions as those for polishing the back chamfered portion.

In Example 4, the shape of the end surface was obtained by R-chamfering with a radius of 0.7 mm. The chamfering wheel (grain sizes: #400 and #800) were used to create the shape of the end surface.

In Example 6, a tape tension was set to 15N, and polishing was performed up to a position of 0.07 mm (5.4% of the sample thickness) from a main surface side.

In Example 7, the entire end surface was polished by brush polishing. As a brush, a roll brush having a channel roll outer shape of <p292 mm using 6,6 nylon having a diameter of <p0.2 mm, bristles of 15 mm, and a pitch of 7 mm was used, and as a slurry, a slurry obtained by adjusting MIREK E30J manufactured by Mitsui Mining & Smelting Co., Ltd. to have a specific gravity of 1.3 by pure water was used. The processing conditions were set to a rotational speed of 600 rpm, a push-in amount of 5 mm, a swing speed of 2 mm/sec, a swing width of 20 mm, and a substrate feeding speed of 1 mm/sec. The change in dimension in a width direction was 0.10 mm.

In Example 8, one type of tape, abrasive grain of GC having a grain size of #4,000, was used for tape polishing.

(Evaluation Results)

In Examples 1 to 4 as Examples, it is found that the polishing time is shortened and the change in dimension is also small. On the other hand, in Example 7 as a Comparative Example, it is found that both the polishing time and the change in dimension are large.

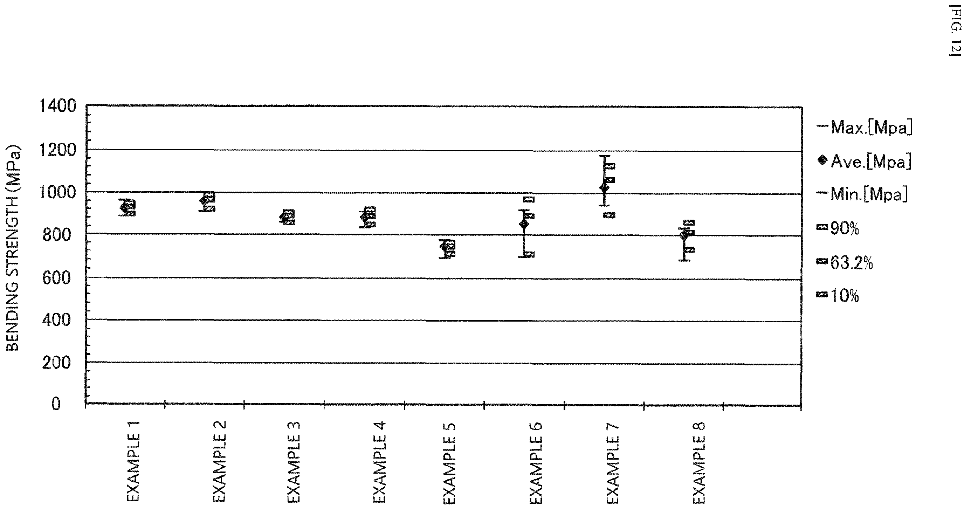

FIG. 12 is a graph illustrating evaluation results of strength in each Example. In FIG. 12, a maximum value, a minimum value, and an average value of the bending strength of each sample (each example), as well as a 90% cumulative fracture probability strength, a 63.2% cumulative fracture probability strength, and a 10% cumulative fracture probability strength calculated by Weibull analysis (linear regression) were plotted.

As illustrated in FIG. 12, in Examples 5, 6, and 8 as Comparative Examples, it is found that the minimum value of the bending strength is small, and the decrease in impact resistance cannot be appropriately prevented. For example, in Example 5, a crack having a length of 8 $\mu$m was present in a region extending from the end portion on the second main surface side of the end surface of the glass sheet to a location that is separated by a length of 9.2% (0.12 mm) of the thickness of the glass sheet toward the first main surface side along the thickness direction of the glass sheet, and the crack exceeded the allowable crack length at the position.

For example, in Example 6, a crack having a length of 8 $\mu$m was present in a region extending from a location that is separated by 5.4% (0.07 mm) of the thickness of the glass sheet to a location that is separated by 9.2% (0.12 mm) of the thickness of the glass sheet, toward the first main surface side from the end portion on the second main surface side of the end surface of the glass sheet, and the crack exceeded the allowable crack length at the position.

On the other hand, in Examples 1 to 4 as Examples, it is found that the minimum value of the bending strength is large and the decrease in impact resistance can be appropriately prevented.

Although the embodiments of the present invention have been described above, these embodiments are not limited to the contents of the embodiments. In addition, the components described above should include those that can be easily conceived by a person skilled in the art, those that are substantially the same, and those within a so-called equivalent range. Further, the components described above can be appropriately combined. Further, various omissions, substitutions, or modifications of the components can be made without departing from the gist of the embodiments described above. The present invention is based on Japanese patent application (JP2021-001081A) filed on January 6, 2021, the contents of which are incorporated herein as a reference.

REFERENCE SIGNS LIST

> 10: glass sheet
> 10A, 10B: main surface
> 10C: end surface
> 12: compressive stress layer
> AR1, AR2: region

**Claims**

1. A glass sheet comprising a first main surface, a second main surface, and an end surface connecting the first main surface and the second main surface, and having a compressive stress layer, wherein

   within the end surface of at least a partial section of a circumference of the main surfaces of the glass sheet, a length of a longest crack in a direction perpendicular to a surface on which the crack is formed in a region is 5 $\mu$m or more and 20 $\mu$m or less, the region extending, from a location that is separated by a length of 9% of a thickness of the glass sheet from an end portion on a first main surface side of the end surface toward a second main surface side along a thickness direction of the glass sheet, to a location that is separated by a length of 91% of the thickness of the glass sheet from the end portion on the first main surface side of the end surface toward the second main surface side along the thickness direction of the glass sheet, and a length of a longest crack in a direction perpendicular to a surface on which the crack is formed in a region is smaller than a satisfying the following formula (A), the region extending, from an end portion on the second main surface side of the end surface, to a location that is separated by a length of 6% of the thickness of the glass sheet from the end portion on the second main surface side of the end surface toward the first main surface side along the thickness direction of the glass sheet:
   [Math. 1]

$$\sigma'_{FS}(a) = \frac{K_{IC}}{\sqrt{\pi a} \cdot F} + \frac{1}{a}\int_0^a f(x)dx = 900 MPa \qquad \cdots (A)$$

   here, a represents a length ($\mu$m) of a crack, $K_{IC}$ represents a fracture toughness value (MPa·m$^{0.5}$), F represents a correction coefficient of a stress intensity factor and is expressed as 1.1215, and f(x) represents a compressive stress (MPa) acting on the glass sheet at a position of a depth x from the second main surface.

2. The glass sheet according to Claim 1, wherein in the end surface, within at least the partial section of the circumference of the main surfaces of the glass sheet, a length of a longest crack in a direction perpendicular to a surface on which the crack is formed in a region is 5 $\mu$m or more and 20 $\mu$m or less, the region extending, from the end portion on the first main surface side of the end surface, to a location that is separated by a length of 94% of the thickness of the glass sheet from the end portion on the first main surface side of the end surface toward the second main surface side along the thickness direction of the glass sheet.

3. The glass sheet according to Claim 1,

   wherein in the end surface, within at least the partial section of the circumference of the main surfaces of the glass sheet,
   a length of a longest crack in a direction perpendicular to a surface on which the crack is formed in a region is 5 $\mu$m or more and 20 $\mu$m or less, the region extending, from the end portion on the first main surface side of the end surface, to a location that is separated by a length of 91% of the thickness of the glass sheet from the end portion on the first main surface side of the end surface toward the second main surface side along the thickness direction of the glass sheet, and
   a length of a longest crack in a direction perpendicular to a surface on which the crack is formed in a region is smaller than a represented by the formula (A), the region extending, from the end portion of the second main surface side of the end surface, to a location that is separated by a length of 9% of the thickness of the glass sheet from the end portion of the second main surface side of the end surface toward the first main surface side along the thickness direction of the glass sheet.

4. The glass sheet according to Claim 1, wherein in the end surface, within at least the partial section of the circumference of the main surfaces of the glass sheet, a length of a longest crack in a direction perpendicular to a surface on which the crack is formed in a region is smaller than a represented by the formula (A), the region extending, from the end portion on the first main surface side of the end surface, to a location that is separated by a length of 9% of the thickness of the glass sheet from the end portion on the first main surface side of the end surface toward the second main surface side along the thickness direction of the glass sheet.

5. The glass sheet according to any one of Claims 1 to 4, having

   a surface compressive stress of 500 MPa or more and 1,200 MPa or less and
   a depth of the compressive stress layer of 10 $\mu$m or more and 100 $\mu$m or less.

6. The glass sheet according to any one of Claims 1 to 5, comprising, in terms of mol% based on oxides:

   50% or more and 80% or less of $SiO_2$;
   1% or more and 20% or less of $Al_2O_3$; and
   6% or more and 20% or less of $Na_2O$.

7. The glass sheet according to any one of Claims 1 to 6, having the thickness of 0.5 mm or more and 3.0 mm or less, wherein the end surface comprises a tapered surface portion.

8. The glass sheet according to any one of Claims 1 to 7, provided in an on-vehicle display device.

9. The glass sheet according to any one of Claims 1 to 8,

   wherein within the end surface of only the partial section of the circumference of the main surfaces of the glass sheet,
   the length of the longest crack in the direction perpendicular to the surface on which the crack is formed in the region is 5 $\mu$m or more and 20 $\mu$m or less, the region extending, from the location that is separated by the length of 9% of the thickness of the glass sheet from the end portion on the first main surface side of the end surface toward the second main surface side along the thickness direction of the glass sheet, to the location that is separated by the length of 91% of the thickness of the glass sheet from the end portion on the first main surface side of the end surface toward the second main surface side along the thickness direction of the glass sheet, and
   the length of the longest crack in the direction perpendicular to the surface on which the crack is formed in the region is smaller than a satisfying the formula (A), the region extending, from the end portion on the second main surface side of the end surface, to the location that is separated by the length of 6% of the thickness of the glass sheet from the end portion on the second main surface side of the end surface toward the first main surface side along the thickness direction of the glass sheet.

10. The glass sheet according to any one of Claims 1 to 8,

   wherein within the end surface of an entire circumference of the main surfaces of the glass sheet,
   the length of the longest crack in the direction perpendicular to the surface on which the crack is formed in the

region is 5 μm or more and 20 μm or less, the region extending, from the location that is separated by the length of 9% of the thickness of the glass sheet from the end portion on the first main surface side of the end surface toward the second main surface side along the thickness direction of the glass sheet, to the location that is separated by the length of 91% of the thickness of the glass sheet from the end portion on the first main surface side of the end surface toward the second main surface side along the thickness direction of the glass sheet, and the length of the longest crack in the direction perpendicular to the surface on which the crack is formed in the region is smaller than a satisfying the formula (A), the region extending, from the end portion on the second main surface side of the end surface, to the location that is separated by the length of 6% of the thickness of the glass sheet from the end portion on the second main surface side of the end surface toward the first main surface side along the thickness direction of the glass sheet.

11. A display device, comprising the glass sheet described in any one of Claims 1 to 10.

12. The display device according to Claim 11, wherein the glass sheet is provided such that the second main surface is on an inner side of the display device.

13. A method for manufacturing a glass sheet comprising a first main surface, a second main surface, and an end surface connecting the first main surface and the second main surface, and having a compressive stress layer, the method comprising, within the end surface of at least a partial section of a circumference of the main surfaces of the glass sheet:

a step of setting a length of a longest crack in a direction perpendicular to a surface on which the crack is formed in a region to 5 μm or more and 20 μm or less, the region extending, from a location that is separated by a length of 9% of a thickness of the glass sheet from an end portion on a first main surface side of the end surface toward a second main surface side along a thickness direction of the glass sheet, to a location that is separated by a length of 91% of the thickness of the glass sheet from the end portion on the first main surface side of the end surface toward the second main surface side along the thickness direction of the glass sheet; and

a step of polishing a region such that a length of a longest crack in a direction perpendicular to a surface on which the crack is formed in the region is smaller than a satisfying the following formula (A), the region extending, from an end portion on the second main surface side of the end surface, to a location that is separated by a length of 6% of the thickness of the glass sheet from the end portion on the second main surface side of the end surface toward the first main surface side along the thickness direction of the glass sheet:

[Math. 2]

$$\sigma'_{FS}(a) = \frac{K_{IC}}{\sqrt{\pi a} \cdot F} + \frac{1}{a}\int_0^a f(x)dx = 900 MPa \qquad \cdots (A)$$

here, a represents a length (μm) of a crack, $K_{IC}$ represents a fracture toughness value (MPa·m$^{0.5}$), F represents a correction coefficient of a stress intensity factor and is expressed as 1.1215, and f(x) represents a compressive stress (MPa) acting on the glass sheet at a position of a depth x from the second main surface.

[FIG. 1]

[FIG. 2]

[FIG. 3]

[FIG. 4]

[FIG. 5]

[FIG. 6]

[FIG. 7]

[FIG. 8]

[FIG. 9]

[FIG. 10]

[FIG. 11]

[FIG. 12]

## INTERNATIONAL SEARCH REPORT

| International application No. |
|---|
| **PCT/JP2021/048430** |

| A. | CLASSIFICATION OF SUBJECT MATTER |
|---|---|

*C03C 21/00*(2006.01)i; *C03C 3/083*(2006.01)i; *G09F 9/00*(2006.01)i
FI: C03C21/00 101; C03C3/083; G09F9/00 313

According to International Patent Classification (IPC) or to both national classification and IPC

| B. | FIELDS SEARCHED |
|---|---|

Minimum documentation searched (classification system followed by classification symbols)

C03C21/00; C03C1/00-14/00; G09F9/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2014/045809 A1 (ASAHI GLASS COMPANY, LIMITED) 27 March 2014 (2014-03-27) entire text, all drawings | 1-13 |
| A | JP 2014-001123 A (ASAHI GLASS COMPANY, LIMITED) 09 January 2014 (2014-01-09) entire text, all drawings | 1-13 |
| A | JP 2016-003158 A (NIPPON ELECTRIC GLASS CO) 12 January 2016 (2016-01-12) entire text, all drawings | 1-13 |
| A | JP 2017-508691 A (CORNING INCORPORATED) 30 March 2017 (2017-03-30) entire text, all drawings | 1-13 |
| A | CN 111204991 A (OPPO GUANGDONG MOBILE TELECOMMUNICATIONS CO., LTD.) 29 May 2020 (2020-05-29) entire text, all drawings | 1-13 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 March 2022** | **22 March 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2021/048430**

| Patent document cited in search report | | | Publication date (day/month/year) | Patent family member(s) | | | Publication date (day/month/year) |
|---|---|---|---|---|---|---|---|
| WO | 2014/045809 | A1 | 27 March 2014 | TW | 201414687 | A | |
| JP | 2014-001123 | A | 09 January 2014 | US | 2015/0147538 | A1 | |
| | | | | entire text, all drawings | | | |
| | | | | WO | 2013/176150 | A1 | |
| | | | | TW | 201404732 | A | |
| | | | | CN | 104350020 | A | |
| | | | | KR | 10-2015-0011818 | A | |
| JP | 2016-003158 | A | 12 January 2016 | WO | 2015/194379 | A1 | |
| | | | | entire text, all drawings | | | |
| | | | | CN | 106458732 | A | |
| | | | | KR | 10-2017-0018325 | A | |
| JP | 2017-508691 | A | 30 March 2017 | US | 2015/0232369 | A1 | |
| | | | | entire text, all drawings | | | |
| | | | | JP | 2017-511777 | A | |
| | | | | JP | 2017-510535 | A | |
| | | | | US | 2015/0165548 | A1 | |
| | | | | WO | 2015/095088 | A1 | |
| | | | | WO | 2015/095089 | A2 | |
| | | | | WO | 2015/113024 | A1 | |
| | | | | WO | 2015/113026 | A2 | |
| | | | | TW | 201536460 | A | |
| | | | | KR | 10-2016-0101068 | A | |
| | | | | CN | 106029590 | A | |
| | | | | TW | 201536461 | A | |
| | | | | KR | 10-2016-0098468 | A | |
| | | | | CN | 106029285 | A | |
| CN | 111204991 | A | 29 May 2020 | (Family: none) | | | |

Form PCT/ISA/210 (patent family annex) (January 2015)

**EP 4 276 082 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2017208995 A
- WO 2016194916 A
- JP 2021001081 A